(19) Europäisches Patentamt
European Patent Office
Office européen des brevets

(11) **EP 3 633 440 B1**

(12) **EUROPEAN PATENT SPECIFICATION**

(45) Date of publication and mention
of the grant of the patent:
**14.08.2024 Bulletin 2024/33**

(21) Application number: **17912168.6**

(22) Date of filing: **31.05.2017**

(51) International Patent Classification (IPC):
**G02C 7/06** *(2006.01)*      **G02C 7/02** *(2006.01)*

(52) Cooperative Patent Classification (CPC):
**G02C 7/027; G02C 7/065; G02C 7/066;**
G02C 7/063

(86) International application number:
**PCT/JP2017/020215**

(87) International publication number:
**WO 2018/220737 (06.12.2018 Gazette 2018/49)**

(54) **DEVICE FOR MANUFACTURING SPECTACLE LENS, DESIGN METHOD, AND DESIGN PROGRAM**

VORRICHTUNG ZUR HERSTELLUNG EINES BRILLENGLASES, ENTWURFSVERFAHREN UND ENTWURFSPROGRAMM

DISPOSITIF DE FABRICATION DE VERRE DE LUNETTES, PROCÉDÉ DE CONCEPTION ET PROGRAMME DE CONCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.04.2020 Bulletin 2020/15**

(73) Proprietor: **Hoya Lens Thailand Ltd.**
**Pathumthani 12130 (TH)**

(72) Inventor: **QI, Hua**
**Tokyo 160-8347 (JP)**

(74) Representative: **Betten & Resch**
**Patent- und Rechtsanwälte PartGmbB**
**Maximiliansplatz 14**
**80333 München (DE)**

(56) References cited:
EP-A1- 2 937 727      EP-A1- 2 937 728
EP-A1- 2 937 729      EP-A1- 2 937 730
WO-A1-2014/097851     WO-A1-2014/097852
WO-A1-2014/097853     WO-A1-2014/097854
WO-A1-2014/128035     JP-A- 2013 171 134
JP-A- 2014 071 420    US-A1- 2010 309 428

## Description

Technical Field

The present invention relates to a spectacle lens producing apparatus, a spectacle lens designing method, and a spectacle lens designing program.

Background Art

A general-purpose progressive addition lens includes a distance vision region and a near vision region, and is designed such that a refractive power progressively changes between the distance vision region and the near vision region.

In a spectacle store, for example, a layout of the progressive addition lens is determined by using a dedicated assisting tool. For example, in Patent Literature 1, a wearer wears a frame mounted with a dummy lens and sees a distance. An examiner adjusts a relative position between the assisting tool and the dummy lens for each of right and left to make a pupil center of the wearer coincide with a distance reference position of the assisting tool, to specify a position on the lens corresponding to a position of the pupil center of the wearer, that is, a position (distance eye point) on the lens during distance viewing by the wearer, for each of right and left. Then, on the basis of the distance eye point, the layout of the progressive addition lens is determined.

Citation List

Patent Literature 1: JP H6-138422 A
Patent Literature 2: WO 2014/097851 A

The following documents disclose further prior art:

EP 2 937 730 A1

EP 2 937 729 A1

EP 2 937 728 A1

EP 2 937 727 A1

WO 2014/128035 A1.

Summary of Invention

Technical Problem

Generally, when general-purpose spectacles are made, progressive addition lenses are produced with a progressive layout with right and left corresponding with each other. The produced right and left lenses each are mounted in a spectacle frame in accordance with a position (distance eye point) on the lens during distance viewing by a wearer. Meanwhile, a pupil height position (a height position of a pupil center) of a person is not always the same on right and left. For such a wearer whose height position of the distance eye point is different between right and left, a position through which right and left visual lines pass on the lens is different from a position assumed by the design, during near viewing in particular. This makes near viewing difficult.

Therefore, as a result of extensive studies, the inventor has found a spectacle lens that provides a good field of view to a wearer whose pupil height position is different between right and left.

Solution to Problem

The invention is directed to the apparatus according to claim 1, the computer-implemented lens design method of claim 8 and the computer program of claim 9.

A spectacle lens producing apparatus according to one aspect of the present invention is an apparatus for producing a pair of right and left spectacle lenses each including: a distance vision region and a near vision region; and a progressive region in which a refractive power progressively changes between the distance vision region and the near vision region. The spectacle lens producing apparatus includes: a reference lens setting means to set a reference lens common to right and left on the basis of prescription information of a wearer; a reference object surface setting means to set a reference object surface formed of a plurality of object points arranged at different object distances, on the basis of right and left reference lenses; and a designing means to set right and left prescription lenses on the basis of the prescription information of the wearer, such that a height position of a distance eye point that is a reference point of the distance vision region is different between right and left in a state of being mounted in a spectacle frame, and design, for each of the set right and left prescription lenses, a corridor of the prescription lens on the basis of a principal ray from each object point on the reference object surface.

According to a spectacle lens produced with an apparatus according to the invention, good binocular vision is provided to a wearer whose pupil height position is different between right and left. Further, according to a spectacle lens producing apparatus according to one aspect of the present invention, a spectacle lens suitable for providing good binocular vision to a wearer whose pupil height position is different between right and left is designed.

Brief Description of Drawings

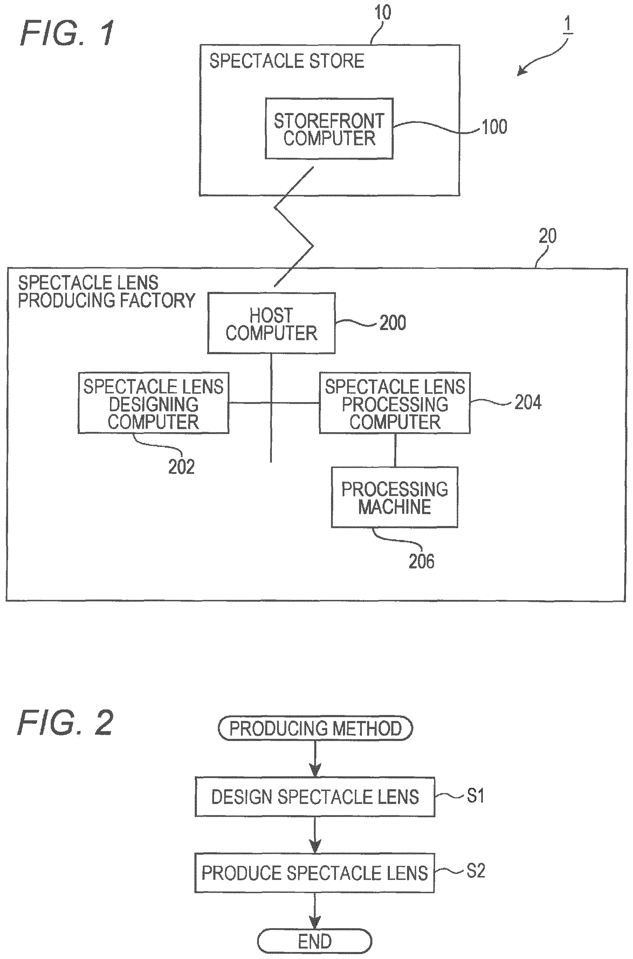

Fig. 1 is a block diagram showing a configuration of a spectacle lens producing system according to one embodiment of the present invention.

Fig. 2 is a flowchart showing a spectacle lens producing method according to one embodiment of the present invention.

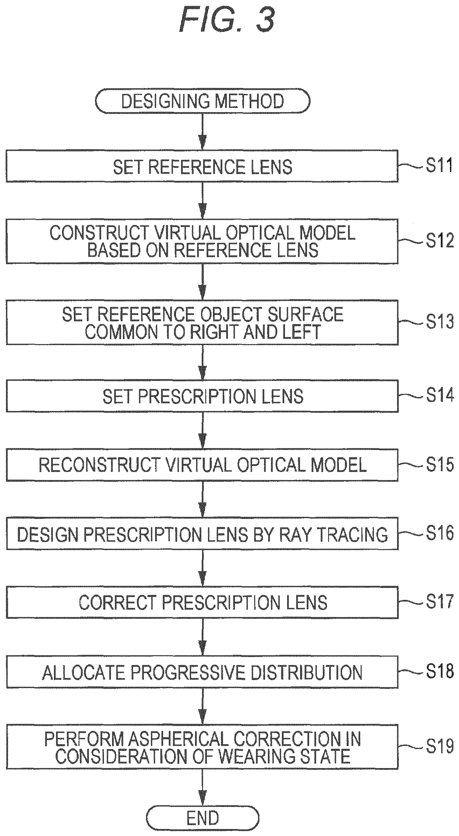

Fig. 3 is a flowchart showing a spectacle lens designing method by a spectacle lens designing computer according to Example 1 of the present invention.

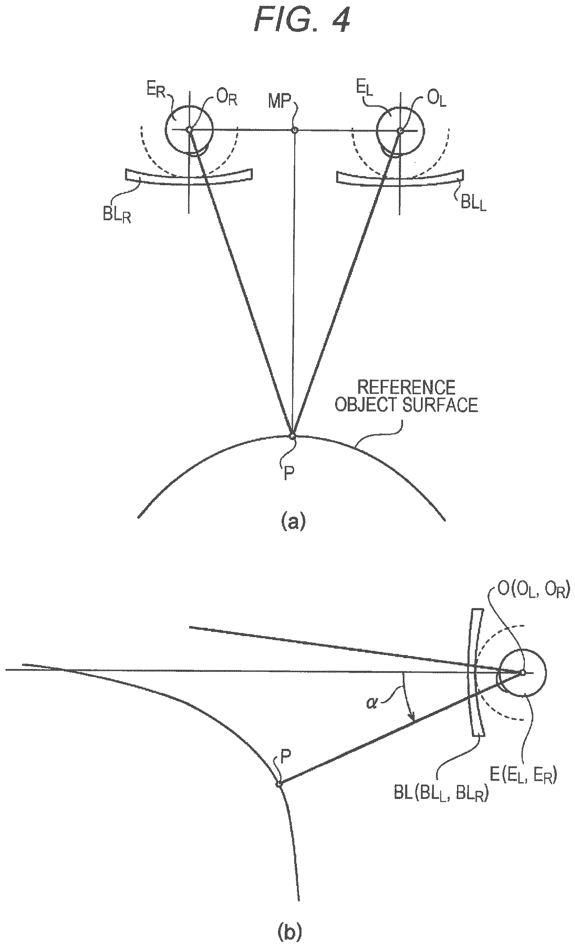

Fig. 4 is a view (Figs. 4(a) and 4(b)) showing an example of a virtual optical model constructed in step S12 of Fig. 3.

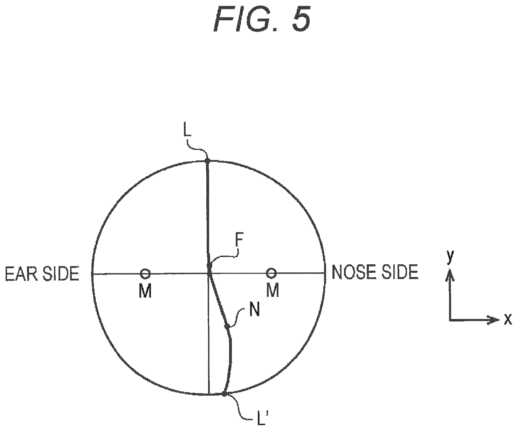

Fig. 5 is a view schematically showing a layout of a spectacle lens designed by using the designing method of Fig. 3.

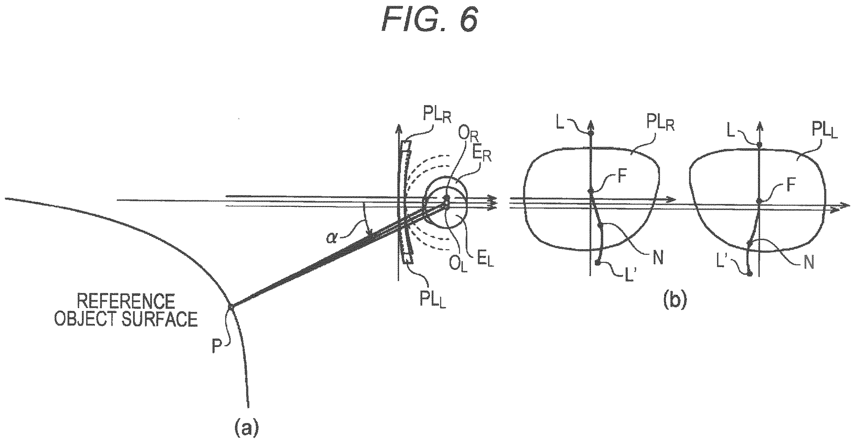

Fig. 6 is a view (Fig. 6(a)) showing an example of a virtual optical model reconstructed in step S15 of Fig. 3, and a view (Fig. 6(b)) illustrating a prescription lens designed by executing step S16.

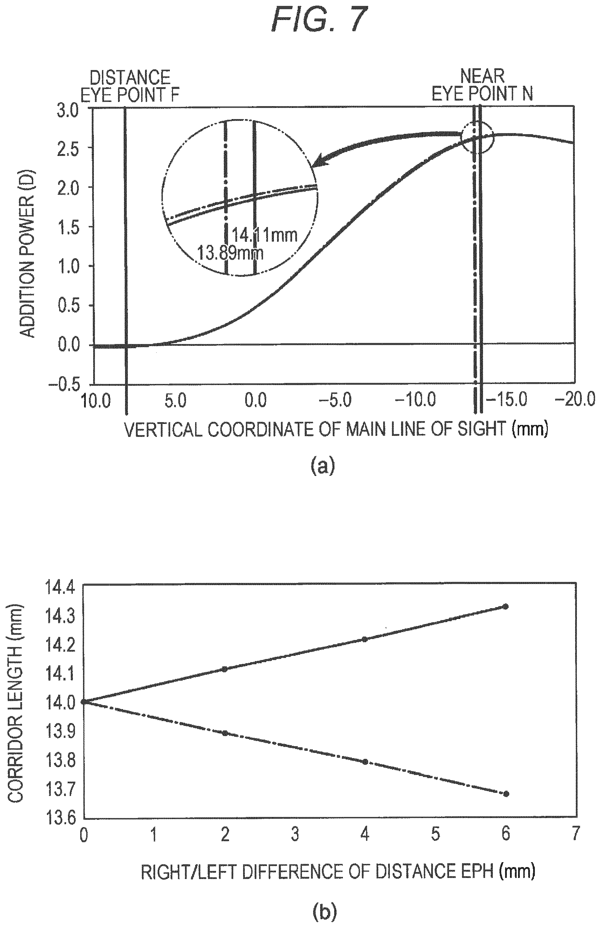

Fig. 7 is a graph (Fig. 7(a)) showing an addition power curve in Numerical Example 1A of a spectacle lens according to Example 1 of the present invention, and a graph (Fig. 7(b)) showing a relationship between a right/left difference of a distance EPE and a corridor length in Numerical Example 1A.

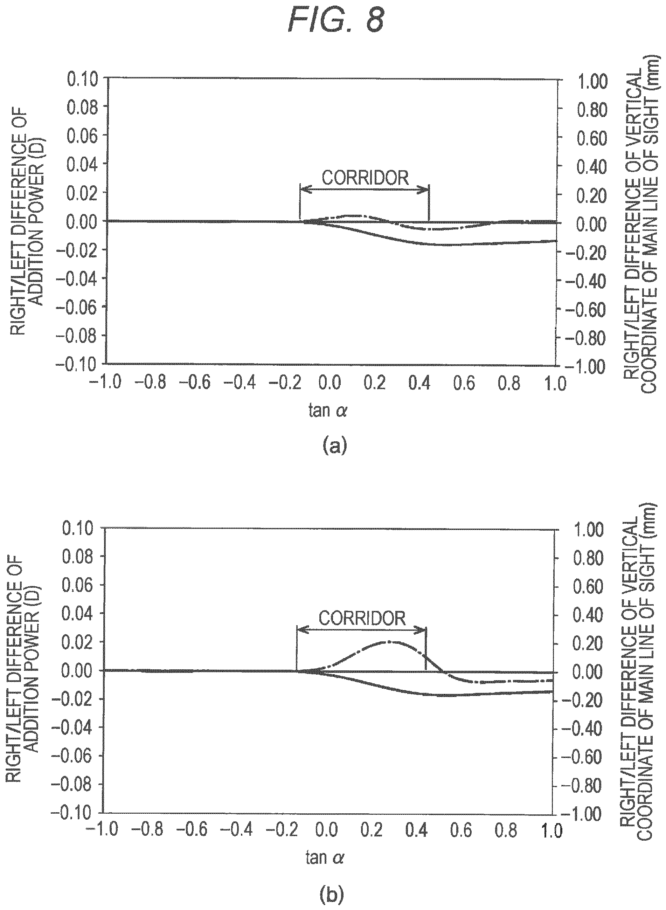

Fig. 8 is a graph (Fig. 8(a)) showing a right/left difference of a visual-line passing position on a main line of sight with respect to a visual line angle and a right/left difference of an addition power in Numerical Example 1A of the spectacle lens according to Example 1 of the present invention, and a graph (Fig. 8(b)) showing a right/left difference of a visual-line passing position on a main line of sight with respect to a visual line angle and a right/left difference of an addition power in Comparative Example A.

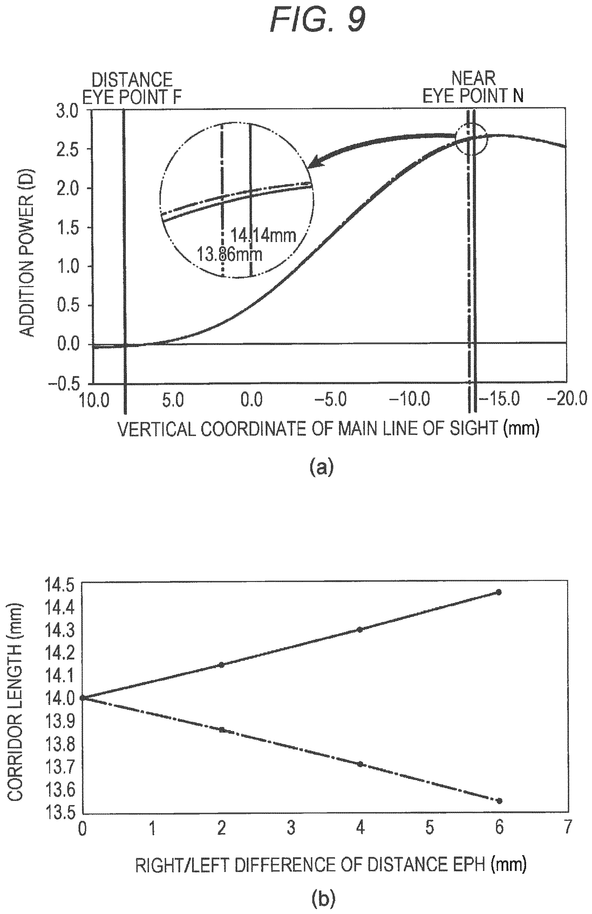

Fig. 9 is a graph (Fig. 9(a)) showing an addition power curve in Numerical Example 1B of the spectacle lens according to Example 1 of the present invention, and a graph (Fig. 9(b)) showing a relationship between a right/left difference of a distance EPH and a corridor length in Numerical Example 1B.

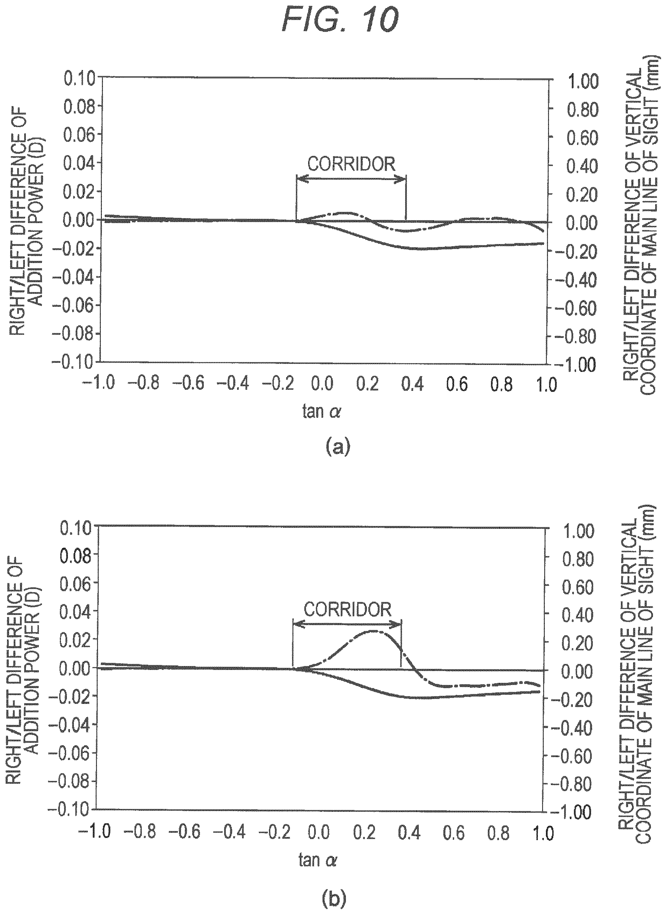

Fig. 10 is a graph (Fig. 10(a)) showing a right/left difference of a visual-line passing position on a main line of sight with respect to a visual line angle and a right/left difference of an addition power in Numerical Example 1B of the spectacle lens according to Example 1 of the present invention, and a graph (Fig. 10(b)) showing a right/left difference of a visual-line passing position on a main line of sight with respect to a visual line angle and a right/left difference of an addition power in Comparative Example B.

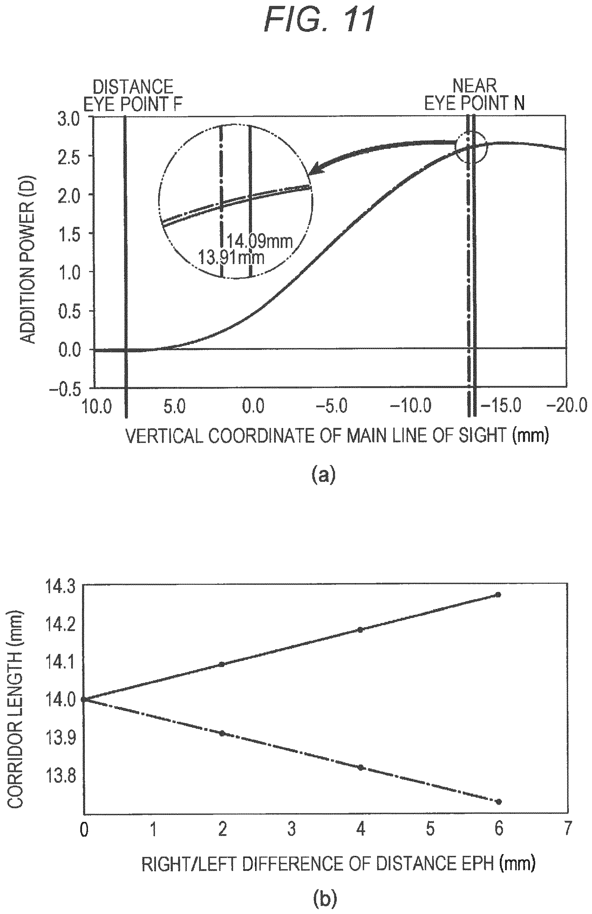

Fig. 11 is a graph (Fig. 11(a)) showing an addition power curve in Numerical Example 1C of the spectacle lens according to Example 1 of the present invention, and a graph (Fig. 11(b)) showing a relationship between a right/left difference of a distance EPH and a corridor length in Numerical Example 1C.

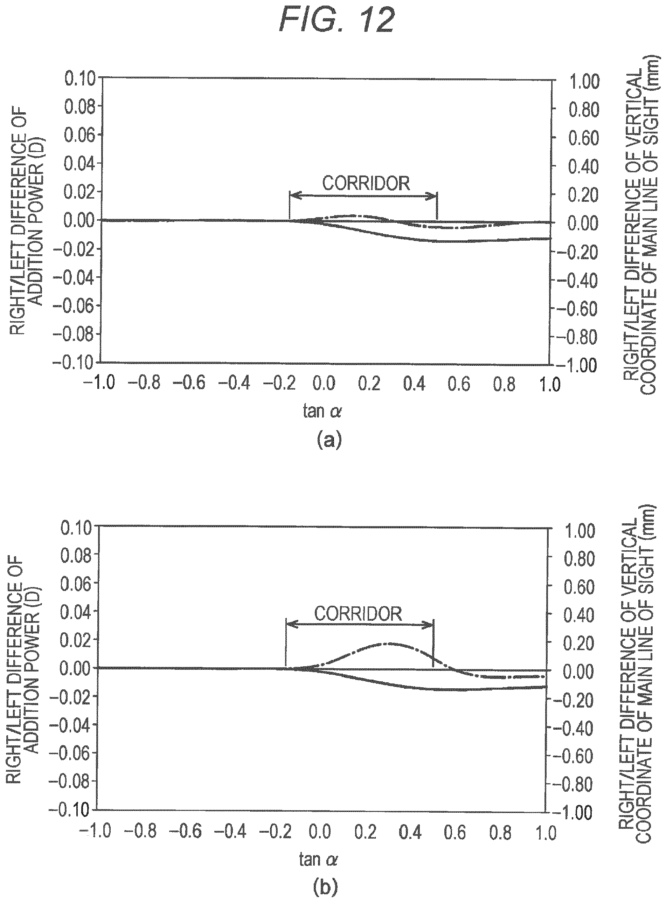

Fig. 12 is a graph (Fig. 12(a)) showing a right/left difference of a visual-line passing position on a main line of sight with respect to a visual line angle and a right/left difference of an addition power in Numerical Example 1C of the spectacle lens according to Example 1 of the present invention, and a graph (Fig. 12(b)) showing a right/left difference of a visual-line passing position on a main line of sight with respect to a visual line angle and a right/left difference of an addition power in Comparative Example C.

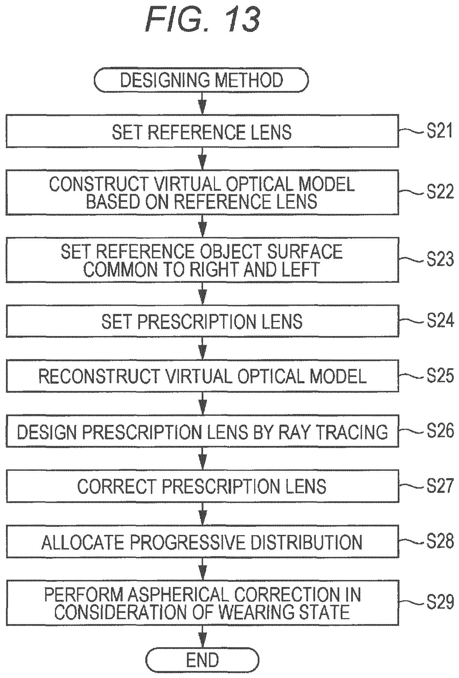

Fig. 13 is a flowchart showing a spectacle lens designing method by a spectacle lens designing computer according to Example 2 of the present invention.

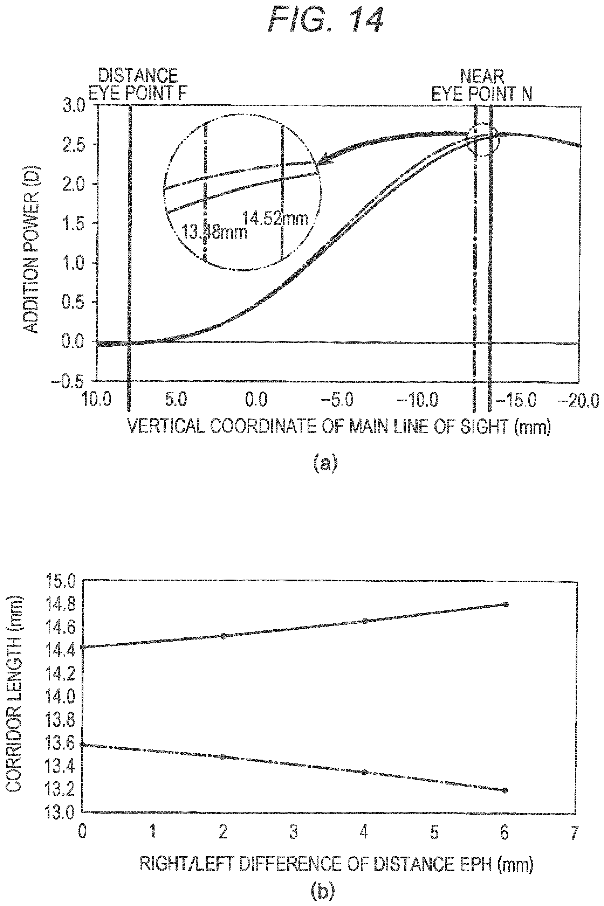

Fig. 14 is a graph (Fig. 14(a)) showing an addition power curve in Numerical Example 2D of a spectacle lens according to Example 2 of the present invention, and a graph (Fig. 14(b)) showing a relationship between a right/left difference of a distance EPH and a corridor length in Numerical Example 2D.

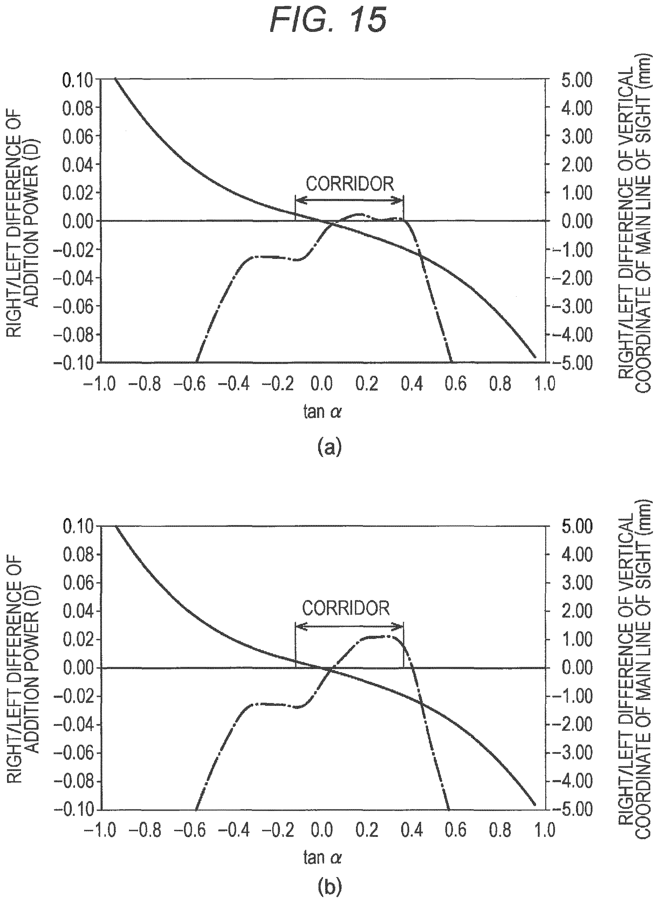

Fig. 15 is a graph (Fig. 15(a)) showing a right/left difference of a visual-line passing position on a main line of sight with respect to a visual line angle and a right/left difference of an addition power in Numerical Example 2D of the spectacle lens according to Example 2 of the present invention, and a graph (Fig. 15(b)) showing a right/left difference of a visual-line passing position on a main line of sight with respect to a visual line angle and a right/left difference of an addition power in Comparative Example D.

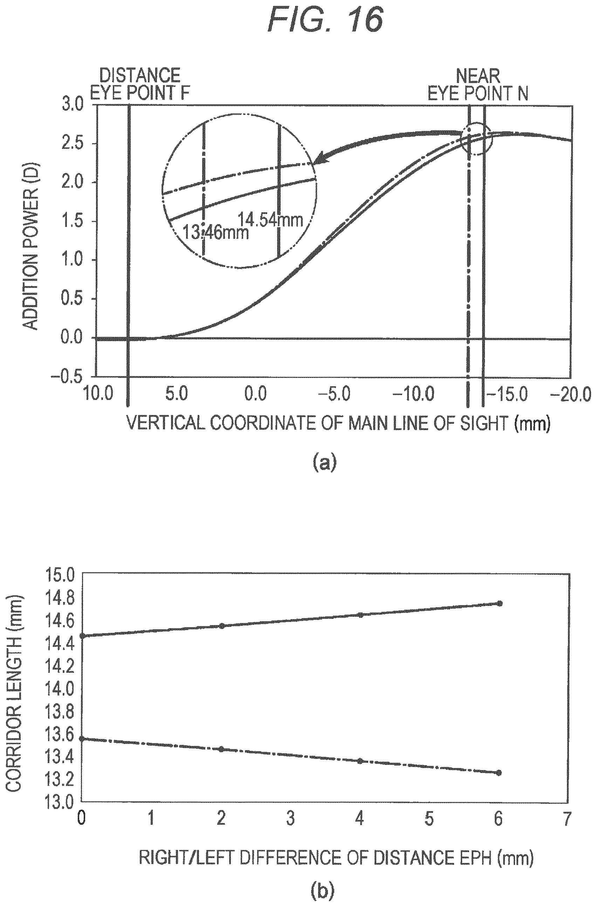

Fig. 16 is a graph (Fig. 16(a)) showing an addition power curve in Numerical Example 2E of the spectacle lens according to Example 2 of the present invention, and a graph (Fig. 16(b)) showing a relationship between a right/left difference of a distance EPH and a corridor length in Numerical Example 2E.

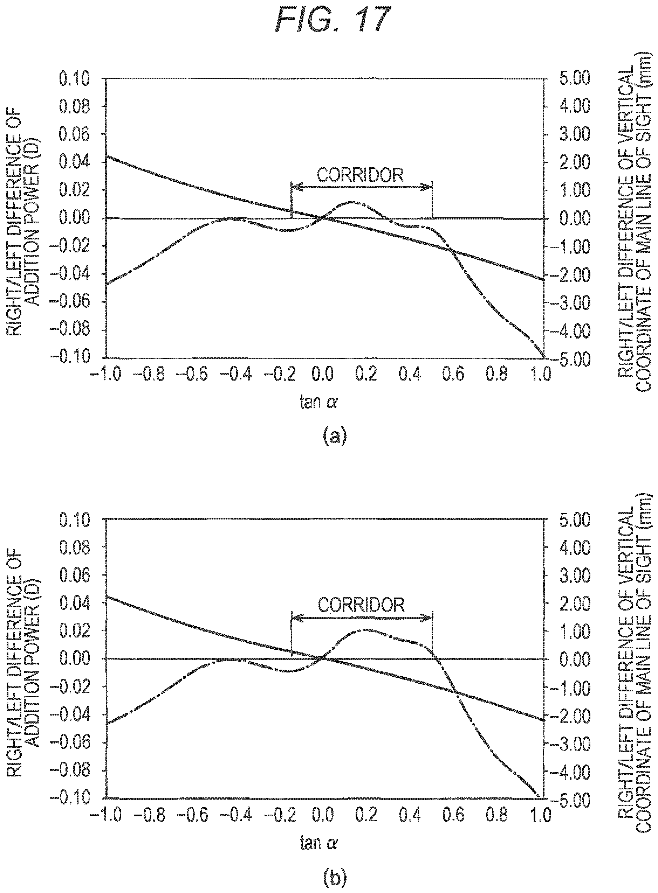

Fig. 17 is a graph (Fig. 17(a)) showing a right/left difference of a visual-line passing position on a main line of sight with respect to a visual line angle and a right/left difference of an addition power in Numerical Example 2E of the spectacle lens according to Example 2 of the present invention, and a graph (Fig. 17(b)) showing a right/left difference of a visual-line passing position on a main line of sight with respect to a visual line angle and a right/left difference of an addition power in Comparative Example E.

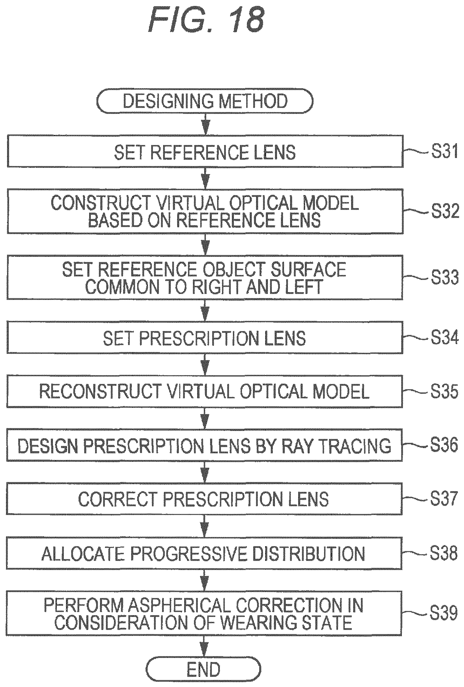

Fig. 18 is a flowchart showing a spectacle lens designing method by a spectacle lens designing computer according to Example 3 of the present invention.

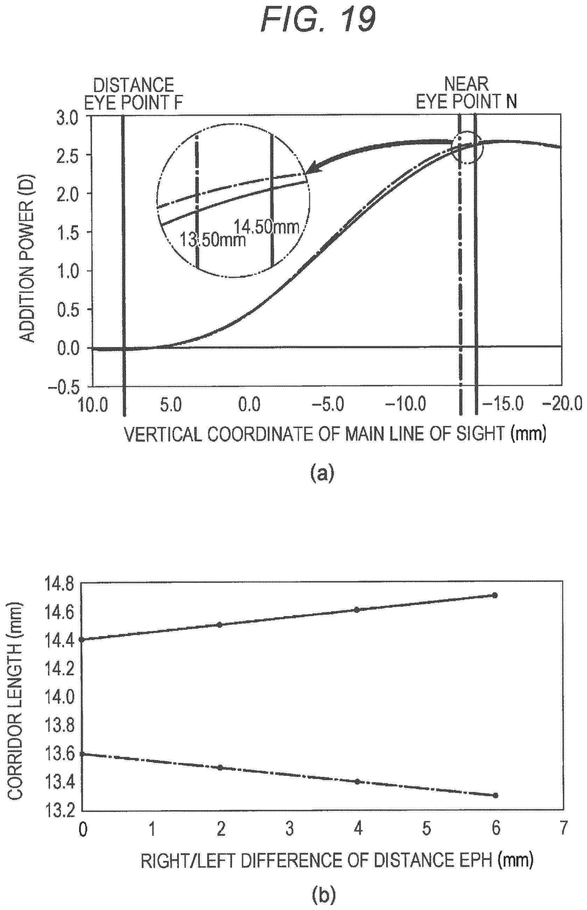

Fig. 19 is a graph (Fig. 19(a)) showing an addition power curve in Numerical Example 3F of a spectacle lens according to Example 3 of the present invention, and a graph (Fig. 19(b)) showing a relationship between a right/left difference of a distance EPH and a corridor length in Numerical Example 3F.

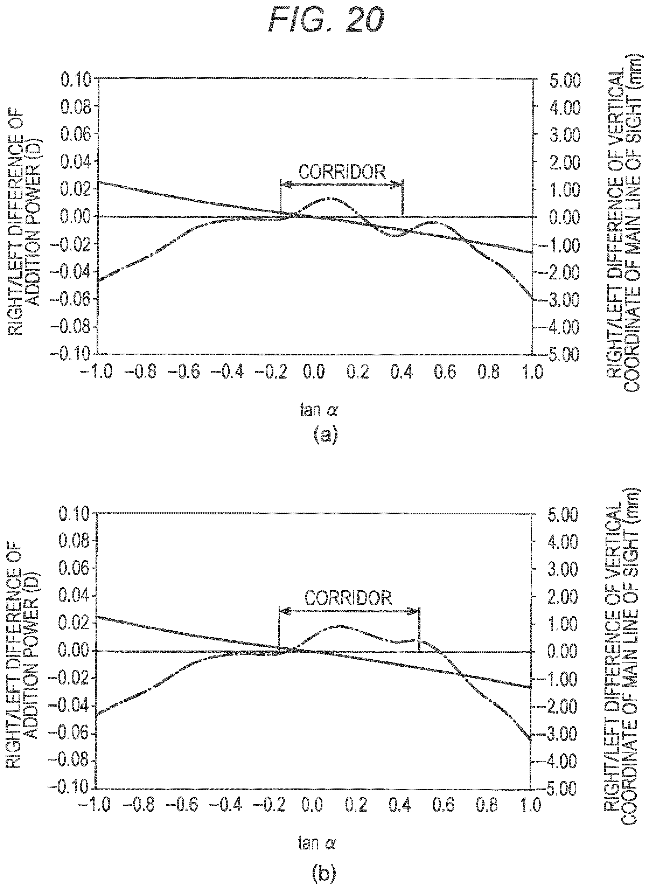

Fig. 20 is a graph (Fig. 20(a)) showing a right/left difference of a visual-line passing position on a main line of sight with respect to a visual line angle and a right/left difference of an addition power in Numerical Example 3F of the spectacle lens according to Example 3 of the present invention, and a graph (Fig. 20(b)) showing a right/left difference of a visual-line passing position on a main line of sight with respect to a visual line angle and a right/left difference of an addition power in Comparative Example F.

Description of Embodiments

Hereinafter, a spectacle lens producing system according to one embodiment of the present invention will be described with reference to the drawings.

[Spectacle Lens Producing System 1]

Fig. 1 is a block diagram showing a configuration of a spectacle lens producing system 1 according to one embodiment of the present invention. As shown in Fig. 1, the spectacle lens producing system 1 includes a spectacle store 10 and a spectacle lens producing factory 20. The spectacle store 10 places an order for a spectacle lens corresponding to a prescription for a customer (wearer). The spectacle lens producing factory 20 receives the order from the spectacle store 10 and produces a spectacle lens. Ordering to the spectacle lens producing factory 20 is performed through data transmission by a predetermined network such as the Internet, FAX, or the like. Orderers may include an ophthalmologist or a general consumer.

[Spectacle Store 10]

In the spectacle store 10, a storefront computer 100 is installed. The storefront computer 100 is, for example, a tablet terminal, a smartphone, a desktop personal computer (PC), a notebook PC, or the like, and is installed with software for placing an order of a spectacle lens to the spectacle lens producing factory 20. To the storefront computer 100, lens data and frame data are inputted through an operation of a mouse, a keyboard, or the like by an operator.
The lens data includes, for example, wearer's prescription information (such as a distance power, a near power, an addition power, a corridor length, a base curve, a spherical refractive power, a cylindrical power, a cylindrical axial direction, a prismatic power, a prism base direction, and a pupillary distance (PD)), wearing conditions of the spectacle lens (a position of a distance eye point, a corneal to vertex distance, a forward inclination angle, and a frame tilt angle), a type of the spectacle lens (monofocal spherical, monofocal aspherical, multifocal (bifocal, progressive), and coating (such as dyeing processing, hard coating, an antireflection film, and ultraviolet cutting)), layout data according to customer's request, and the like.
The frame data includes shape data of a frame selected by the customer. The frame data is managed by a barcode tag, for example, and can be obtained by reading the barcode tag affixed to the frame, by a barcode reader.
The storefront computer 100 transmits order data (lens data and frame data) to the spectacle lens producing factory 20 via the Internet, for example.

[Spectacle Lens Producing Factory 20]

In the spectacle lens producing factory 20, a local area network (LAN) centering on a host computer 200 is established, and connected with a large number of terminal devices including a spectacle lens designing computer 202 and a spectacle lens processing computer 204 that form a spectacle lens producing apparatus.
The spectacle lens designing computer 202 and the spectacle lens processing computer 204 are general PCs, and respectively installed with a program for designing a spectacle lens and a program for processing a spectacle lens. Order data transmitted from the storefront computer 100 via the Internet is inputted to the host computer 200. The host computer 200 transmits the inputted order data to the spectacle lens designing computer 202.

[Spectacle Lens Producing Method in Spectacle Lens Producing Factory 20]

[S1 (Design of Spectacle Lens) in Fig. 2]

Fig. 2 is a flowchart showing a spectacle lens producing method in the spectacle lens producing factory 20. The spectacle lens designing computer 202 is installed with a program for designing a spectacle lens in accordance with a received order, and creates lens design data on the basis of order data (lens data) and creates lens shape processing data on the basis of order data (frame data). The spectacle lens designing computer 202 transmits the created lens design data and lens shape processing data to the spectacle lens processing computer 204.

[S2 (Producing of Spectacle Lens) in Fig. 2]

The spectacle lens processing computer 204 reads the lens design data and the lens shape processing data received from the spectacle lens designing computer 202, and drives and controls a processing machine 206.
For example, a case is considered where plastic spectacle lenses are produced by a cast polymerization method. In this case, the processing machine 206 performs grinding and polishing on a material such as metal, glass, ceramics, or the like in accordance with the lens design data, to make a molding die corresponding to each surface of an outer surface (convex surface) and an inner surface (concave surface) of the lens.
A pair of made molding dies are arranged opposingly with each other with an interval corresponding to a thickness of the spectacle lens, and outer peripheral surfaces of both molding dies are wound with an adhesive tape to seal a space between the molding dies.

When the pair of molding dies are set in a spectacle lens casting device, a hole is made in a part of the adhesive tape, and a liquid monomer is injected into a cavity (sealed space between the molding dies) through this hole. The liquid monomer injected and filled in the cavity is cured by heat, ultraviolet irradiation, or the like. This provides a spectacle lens substrate transferred with each of a transfer surface shape of the pair of molding dies and a peripheral shape by the adhesive tape.

The spectacle lens substrate obtained by curing is removed from the molding dies. From the spectacle lens substrate removed from the molding dies, residual stress is removed by an annealing process. Thereafter, various coatings such as dyeing processing, hard coating treatment, an antireflection film, ultraviolet ray cutting, and the like are applied. As a result, the spectacle lens is completed and delivered to the spectacle store 10.

Further, in the spectacle lens producing factory 20, in order to improve productivity, a power of the entire production range may be divided into a plurality of groups, and there may be prepared in advance, for orders for spectacle lenses, a group of semi-finished lens blanks having a convex-surface curve shape (e.g., a spherical shape, an aspherical shape, or the like) and a lens diameter that are adapted to the power range of each group.

The semi-finished lens blanks are, for example, resin blanks or glass blanks, and a convex surface and a concave surface are an optical surface (completed surface) and a non-optical surface (incomplete surface), respectively. In this case, optimum semi-finished lens blanks are selected on the basis of lens data, and the selected semi-finished lens blanks are set in the processing machine 206.

The processing machine 206 makes an uncut lens by grinding and polishing the concave surface of the set semi-finished lens blanks in accordance with the lens design data.

To the uncut lens after being made with the concave shape, various coatings such as dyeing processing, hard coating treatment, an antireflection film, ultraviolet cutting, and the like are applied.

On the uncut lens after various coatings, peripheral edge processing is performed on an outer peripheral surface on the basis of lens shape processing data created by the spectacle lens designing computer 202. The spectacle lens processed into the lens shape is delivered to the spectacle store 10. Further, in the spectacle lens producing factory 20, the spectacle lens may be produced and processed by using lens blanks with both the convex and concave surfaces spherically shaped, instead of the semi-finished lens blanks.

[Example 1]

In this Example 1, a description will be given to a design of a spectacle lens corresponding to a wearer having a height position of a distance eye point different between right and left, and having a distance power same on right and left. Fig. 3 is a flowchart showing a spectacle lens designing method to be executed by the spectacle lens designing computer 202 in Example 1 of the present invention.

Spectacle lenses to be designed exemplarily include various types of general-purpose spectacle lenses of a single-sided progressive type, a double-sided progressive type, and a double-sided integrated progressive type. The single-sided progressive type is a type having a progressive refractive component on an inner surface or an outer surface. The double-sided progressive type is a type having a progressive refractive component allocated on both an outer surface and an inner surface. The double-sided integrated progressive type is a type having a vertical progressive refractive component on to an outer surface and a horizontal progressive refractive component allocated on an inner surface. Further, the object to be designed may include other types of spectacle lenses having a progressive refractive portion in which refractive power progressively changes, such as occupational progressive-power lenses and near dual progressive addition lenses of a single-sided progressive type, a double-sided progressive type, and a double-sided integrated progressive type.

Strictly speaking, in optometry, a direction of an ocular axis and a visual line are slightly different, but an influence due to the difference is substantially negligible. Therefore, in this specification, for convenience of description, it is assumed that a direction of an ocular axis is coincident with a direction of a visual line even in optometry.

Generally, when general-purpose spectacles are made, progressive addition lenses are produced with a progressive layout with right and left corresponding with each other. The produced right and left lenses each are mounted in a spectacle frame in accordance with a position (distance eye point) on the lens during distance viewing by a wearer. For this reason, for a wearer whose height position of the distance eye point is different between right and left (in other words, a wearer whose pupil height position is different between right and left), a height position of a visual line is different between right and left during near viewing, and positions through which the right and left visual lines pass on the lens are respectively different from positions assumed by the design. If the position through which the visual line passes on the lens is different from the position assumed by design, a power effect expected in the design cannot be exhibited.

Further, physiologically, adjustments working on the right and left eyes are always equal (Hering's law of equal innervation). Therefore, a conventional progressive addition lens is designed to have a progressive layout with right and left corresponding with each other such that addition effects acting on the right and left eyes become equal. However, if a position through which a visual line passes on the lens is changed from the position assumed by the design, the addition effect acting on the right and left eyes is changed.

The inventor has found that, from evaluation of progressive addition lenses, these problems described above arise due to the fact that the height position of the distance eye point is different between right and left. Further, the inventor has found that, as a result of examination, it is effective to provide a progressive addition lens that gives different corridor lengths on right and left, for a wearer whose height position of the distance eye point is different between right and left. Hereinafter, a designing method of the progressive addition lens according to one embodiment of the present invention will be described.

Fig. 3 is a flowchart showing an operation in which the spectacle lens designing computer 202 creates lens design data in this Example 1. Hereinafter, a spectacle lens designing method in this Example 1 will be specifically described with reference to Fig. 3.

[S11 (Setting of Reference Lens) in Fig. 3]

In step S11, right and left reference lenses are set on the basis of wearer's prescription information received from the storefront computer 100 via the host computer 200. Meanwhile, the right and left reference lenses are designed at least on the basis of a distance power, an addition power, and a corridor length, as prescription information. The right and left reference lenses are lenses that are virtually set, and are progressive addition lenses common to right and left. In this Example 1, the reference lens is a spectacle lens having a layout including an eye point and a power (distance power, addition power) that are common to right and left. Meanwhile, a center thickness of the reference lens is determined on the basis of prescription information, a refractive index of a glass material, and the like.

[S12 (Construction of Virtual Optical Model based on Reference Lens) in Fig. 3]

In step S12, a virtual optical model (first virtual optical model) is constructed assuming a state where the wearer wears the right and left reference lenses. Figs. 4(a) and 4(b) show an example of a virtual optical model constructed in step S12. Figs. 4(a) and 4(b) are views of eyeball models arranged on right and left, as viewed from above and from a side, respectively.

As shown in Figs. 4(a) and 4(b), the virtual optical model includes right and left eyeball models E ($E_R$ and $E_L$) and reference lenses BL ($BL_R$ and $BL_L$). In step S12, heights of the eyeball models $E_R$ and $E_L$ (heights of the pupils of $E_R$ and $E_L$) are set to a same height, and each of the reference lenses $BL_R$ and $BL_L$ is set such that a height position of the distance eye point is same as a height position of the pupil of the eyeball model.

Meanwhile, in step S12, the height positions of the eyeball models $E_R$ and $E_L$ may be determined by averaging height positions of the actual right and left pupils of the wearer. In other words, one height position of the eyeball models $E_R$ and $E_L$ may be shifted upward, and the other height position may be shifted downward. In addition, the height positions of the eyeball models $E_R$ and $E_L$ may be made equal by shifting the other height position upward or downward without changing the one height position of the eyeball models $E_R$ and $E_L$. In this case, among the eyeball models $E_R$ and $E_L$, without changing a height position of the eyeball model of the wearer's dominant eye, the other height position may be shifted upward or downward. Further, without changing a height position of the eyeball model with higher visual acuity obtained at a time of optometry, the other height position may be shifted upward or downward.

An ocular axial length of the eyeball differs in hyperopia and myopia. Therefore, the spectacle lens designing computer 202 stores in advance in a memory how much the ocular axial length is different depending on a degree of hyperopia and myopia. In step S12, an eyeball model having an appropriate ocular axial length is selected in accordance with wearer's prescription values (a spherical refractive power, a cylindrical power) included in order data, and the selected eyeball model is placed in a virtual model space. The right and left eyeball models $E_R$ and $E_L$ are arranged at positions where respective eyeball rotation centers O (a rotation center $O_R$ of the eyeball model $E_R$ and a rotation center $O_L$ of the eyeball model $E_L$) are separated by a pupillary distance (PD).

Further, in step S12, the reference lenses $BL_R$ and $BL_L$ are arranged at positions spaced by a corneal to vertex distance (CVD) from the eyeball models $E_R$ and $E_L$, respectively. The corneal to vertex distance is a distance between back vertexes of the reference lenses $BL_R$ and $BL_L$ and the corneal vertexes of the eyeball models $E_R$ and $E_L$, and is, for example, 12.5 mm. Further, the reference lens BL may be arranged in the virtual model space in consideration of a slope (a forward inclination angle, a frame tilt angle) of the spectacle lens. It should be noted that, in the following description, the eyeball model $E_R$ may be described as "eyeball model (right)", and the eyeball model $E_L$ may be described as "eyeball model (left)" for clarifying the description.

Fig. 5 schematically shows a layout of a spectacle lens designed in accordance with a designing method of one embodiment of the present invention. As shown in Fig. 5, the spectacle lens is arranged with a distance eye point F that is an assumed position on the lens during distance viewing, and a near eye point N that is an assumed position on the lens during near viewing. A distance power is set for the distance eye point F, and a near power is set to the near eye point N. Further, a main line of sight LL' is designed to pass through the distance eye point F and the near eye point. As shown in Fig. 5, the main line of sight LL' is designed (inset design) to be curved toward the nose in consideration of convergence of the eye. The spectacle lens is designed such that a power progressively changes along the main line of sight LL' from the distance eye point F toward the near eye point N.

Positions of the distance eye point F and the near eye point N on the spectacle lens are specified on the basis of a pair of hidden marks M directly engraved on the spectacle lens. In the spectacle lens according to one example the height position of the distance eye point F is different between right and left in a state of being mounted in a frame. Then, in the spectacle lens according to one example corridor length is also different between right and left. That is, an addition power curve on the corridor, in other words, a change in the addition power on the corridor is different between right and left. Details will be described later.

Meanwhile, a designer of the spectacle lens designs the corridor and designs the layout of the progressive addition lens. The corridor is generally designed as a band-shaped region including a line that is on the main line of sight and connects one point of a distance vision region and one point of a near vision region. Meanwhile, the definition of the corridor is different for each spectacle lens manufacturer. For example, the line is on the main line of sight and connects the distance eye point and the near eye point. Further, for example, the line is on the main line of sight and connects a start point of progressive in the distance vision region and the near eye point.

Further, in the following description, for convenience of description, a height of the distance eye point F from a bottom of the frame will be described as "distance EPH" and a height of the near eye point N from a bottom of the frame will be described as "near EPH".

[S13 (Setting of Reference Object Surface Common to Right and Left) in Fig. 3]

In step S13, on the basis of the virtual optical model that has been set in step S12, a reference object surface including a plurality of object points arranged at different object distances is set. It should be noted that the reference object surface is commonly set on right and left.

In step S16 described later, ray tracing processing is performed for each of the right and left lenses on the basis of the set reference object surface common to right and left. In this manner, since the reference object surface common to right and left is set, and the ray tracing processing is performed on the basis of the set reference object surface, it is possible to design spectacle lenses suitable for seeing a same thing with both eyes, that is, for binocular vision.

A specific example of setting a reference object surface common to right and left in step S13 will be described with reference to Figs. 4(a) and 4(b). Figs. 4(a) and 4(b) show the reference object surface common to right and left that is set in the virtual model space. In setting the reference object surface, an object point P is firstly set at each object distance on a median plane that passes through a midpoint MP of a line segment $O_L O_R$ connecting the both eyeball rotation centers $O_L$ and $O_R$ and is perpendicular to the line segment $O_L O_R$. Exemplarily, the object point P is set at a position away from the midpoint MP by the object distance corresponding to the addition power in accordance with a downward rotation angle $\alpha$. The downward rotation angle $\alpha$ is determined in accordance with a predetermined progressive corridor length. The downward rotation angle $\alpha$ of a near position (an object distance corresponding to the near power) is determined such that a ray reaches when the ray passes through the near position of the lens. Here, in order to use for design of a spectacle lens, the object point P is arranged in each of an object distance corresponding to the near power (near work distance, which is 400 mm in this case), an object distance corresponding to a power at a sample point on the main line of sight LL' in the corridor (500 mm, ... 1000 mm, ...), and an object distance corresponding to the distance power (a distance that can be regarded as an infinite distance, such as 5000 mm). As shown in Figs. 4(a) and 4(b), a continuous median plane object curve is set by smoothly connecting object points P arranged at the respective object distances. By developing the object curve on both sides of the median plane with a certain rule, the reference object surface is formed. As a method of developing, for example, it is conceivable to move the curve as it is, or to set the curve gradually far away or close depending on a lateral distance.

[S14 (Setting of Prescription Lens) in Fig. 3]

In step S14, right and left prescription lenses are set on the basis of wearer's prescription information. The prescription lens is a lens that is virtually set similarly to the reference lens BL. However, the prescription lenses are set on assumption of a state where the wearer actually wears lenses. When right and left distance powers are different (Examples 2 and 3 to be described later), distance powers different between right and left are set.

[S15 (Reconstruction of Virtual Optical Model) in Fig. 3]

In step S15, the virtual optical model constructed in step S12 is changed to a virtual optical model (second virtual optical model) including an eyeball model E and the prescription lens set in step S14, assuming a state where the wearer actually wears the lens.

More specifically, in step S15, the eyeball models $E_R$ and $E_L$ are set in accordance with the right and left pupil height positions of the wearer, and each prescription lens is set such that a height position of the distance eye point is same as a pupil height position of the eyeball model. In other words, in the eyeball model whose height position has been changed in step S12, the height position is returned to the actual pupil position of the wearer in step S15.

For example, when the pupil of the left eye of the wearer is located at a position 2 mm lower than the pupil of the right eye, the eyeball model (left) of the right and left eyeball models is arranged at a position 2 mm lower than the eyeball model (right) in step S15. Then, the right and left prescription lenses are arranged such that a height position of the distance eye point F of the prescription lens (left) is located at a position 2 mm lower than the distance eye point F of the prescription lens (right).

That is, the arrangement of the virtual optical model of the left eye is shifted downward by 2 mm from the arrangement of the virtual optical model constructed in step S12.

Fig. 6(a) shows an example of the virtual optical model reconstructed in step S15 (an example of ray tracing processing in step S16 described later), and Fig. 6(b) shows an example of a corridor to be obtained by the ray tracing processing of Fig. 6(a).

The virtual optical model in Fig. 6(a) includes the reference object surface that has been set in step S13, the eyeball model E ($E_R$ and $E_L$) that has been reconstructed in step S15, and right and left prescription lenses PL ($PL_R$ and $PL_L$). As shown in Fig. 6(a), in the reconstructed virtual optical model, the model on the left eye side (the eyeball model $E_R$ and the prescription lens $PL_R$) is shifted downward with respect to the model on the right eye side (the eyeball model $E_L$ and the prescription lens $PL_L$).

[S16 (Design of Prescription Lens by Ray Tracing) in Fig. 3]

In step S16, for each of the right and left prescription lenses PL, ray tracing processing is performed on the basis of the virtual optical model that has been reconstructed in step S15 and the reference object surface that has been set in step S13, and the corridor of the prescription lens PL is determined.

Specifically, as shown in Fig. 6(a), a ray connecting each object point P on the reference object surface that has been set in step S13 and each of the eyeball rotation centers $O_R$ and $O_L$ is set. Next, a position through which each the set ray passes on the prescription lens PL is calculated, and an addition power at a passing position on the prescription lens PL of each the calculated ray is calculated (estimated). For example, ray tracing processing is performed at a near object point and any point on the reference object surface, and the near eye point N on the prescription lens PL and the passing position on the prescription lens PL of the ray to the near object point are calculated. Next, the near power of the wearer is set to the near eye point N, similar ray tracing processing is then performed, and the addition power of each of other passing points (e.g., a sample point on the main line of sight LL') is calculated.

It should be noted that the method of calculating the addition power is not limited to this. As another example, a method can be considered in which ray tracing is performed only at the near object point on the reference object surface, and the main line of sight LL' connecting the distance eye point F and the near eye point N is determined. Then, on the basis of a distance between the distance eye point F and the near eye point N and the addition power, the addition power of each point on the main line of sight LL' is calculated. Further, a method can also be considered in which ray tracing is performed on at least one object point P on the reference object surface, the main line of sight LL' connecting the distance eye point F and the near eye point N is determined, and the addition power of each point on the main line of sight LL' is calculated on the basis of a distance between the distance eye point F and the near eye point N and the addition power.

For example, the addition power curve can be obtained by connecting a data point of an addition power at each passing position on the main line of sight LL' with use of spline interpolation or the like.

Fig. 6(b) illustrates the prescription lens PL designed by executing step S16. As shown in Fig. 6(b), in the prescription lens PL designed by executing step S16, the height position of the distance eye point F (and the near eye point N) is different between right and left in accordance with the right/left difference of the pupil height position of the wearer.

In this way, in step S15, in the virtual optical model, the eyeball model E and the prescription lens PL are arranged in accordance with the height of the distance eye point, on assumption of a state where the wearer actually wears the lens. In step S16, ray tracing is performed by using the virtual optical model in step S15, and the corridor of the right and left prescription lenses PL is determined. This allows the corridor having a corridor length different between the right and left prescription lenses PL to be determined.

[S17 (Correction of Prescription Lens) in Fig. 3]

In step S17, correction is made such that a difference between right and left addition effects on the corridor is further reduced for the prescription lens PL designed in step S16. Hereinafter, a method of correcting the prescription lens PL will be described.

<<Correction Method 1>>

Among the right and left prescription lenses PL obtained in step S16, in the prescription lens PL with a lower height position of the distance eye point F, the near eye point N is also lowered to a position lower by the same amount as the distance eye point F with respect to the other prescription lens PL. Therefore, in looking at a reference object surface common to both eyes, inconsistency occurs in addition effects of right and left eyes from the middle to the near side. In Correction Method 1, at least one of the prescription lenses PL is corrected such that the addition effect in looking at a near object point is coincident in the right and left prescription lenses PL.

As an example, the prescription lens PL with a lower distance eye point F is not corrected, but the prescription lens PL with a higher distance eye point F is corrected. Specifically, in the prescription lens PL with a higher distance eye point F, the near eye point N is shifted downward along the main line of sight LL' (exemplarily, shifted so as to be close to the height position of the other near eye point N). In this way, addition effects of the right and left prescription lenses PL are matched in looking at a near object point on the reference object surface common to both eyes.

Further, the prescription lens PL with a higher distance eye point F is not corrected, but the prescription lens PL with a lower distance eye point F is corrected. Specifically, in the prescription lens PL with a lower distance eye point F, the near eye point N is shifted upward along the main line of sight LL' (exemplarily, shifted so as to be close to the height position of the other near eye point N). In this way, addition effects of the right and left prescription lenses PL may be matched in looking at a near object point on the reference object surface common to both eyes.

Further, the near eye point N of the prescription lens PL with a higher distance eye point F is shifted downward along the main line of sight LL', and the near eye point N of the prescription lens PL with a lower distance eye point F is shifted upward along the main line of sight LL' (exemplarily, mutually shifted so as to be close to the height positions of the right and left near eye points N). In this way, addition effects of the right and left prescription lenses PL may be matched in looking at a near object point on the reference object surface common to both eyes.

By shifting the near eye point N such that the addition effects of the right and left prescription lenses PL are matched in looking at a near object point on the reference object surface common to both eyes, the corridor length of the prescription lens PL with a higher distance eye point F becomes longer than the corridor length of the prescription lens PL with a lower distance eye point F.

It should be noted that the corridor length varies depending on which lens's near eye point N is shifted. For wearers who prefer a long corridor (gentle change of addition power), it is suitable to apply the correction method for downwardly shifting the near eye point N of the prescription lens PL with a higher distance eye point F. For wearers who prefer a short corridor (near vision with a small eyeball rotation angle, a frame with a narrow vertical width), it is suitable to apply the correction method for upwardly shifting the near eye point N of the prescription lens PL with a lower distance eye point F.

For the prescription lens PL whose near eye point N has been shifted, the addition power curve is corrected such that the near power is obtained at a position of the near eye point N after correction. As an example, the addition power curve is corrected such that a right/left difference of a substantial addition power at the near eye point N is 0.05D or less.

As a supplement, in the addition power curve, not only one point of the near eye point N is corrected, but correction is made such that the addition power changes smoothly on the main line of sight LL', for example, with use of spline interpolation or the like. The addition power curve is gentler in the prescription lens PL with a higher distance eye point F (in other words, a long corridor length).

<<Correction Method 2>>

Correction is made so as to reduce a difference between the right and left addition effects on the corridor among the addition power curves of the right and left prescription lenses PL obtained in step S17.

Correction Method 2 will be specifically described with reference to Fig. 6(a). A horizontal axis of Fig. 6(a) shows tan $\alpha$. As shown in Fig. 6(a), an angle $\alpha$ is a vertical component of an angle formed by a horizontal line passing through a midpoint of the right and left eyeball rotation centers and a line connecting each point of the corridor. Further, as shown in Fig. 6(a), the angle $\alpha$ takes a positive value in a downward direction of the rotation direction, and takes a negative value in an upward direction of the rotation direction.

For example, by calculating the addition power of each point on the main line of sight at tan $\alpha$ in Fig. 6(a) for each of the right and left prescription lenses PL obtained in step S17, respective angle-based (viewing-angle-based) addition power curves of the right and left prescription lenses PL are calculated. Then, the corridor of the right and left prescription lenses PL is corrected such that the calculated angle-based addition curves each approaches one another. Alternatively, either one of the calculated angle-based addition power curves may be corrected so as to be close to the other, and one corridor of the right and left prescription lenses PL may be corrected.

[S18 (Allocation of Progressive Distribution) in Fig. 3]

In step S18, for each of right and left, progressive distribution of the prescription lens PL (curvature distribution to be added with a progressive refractive component in curvature distribution of the entire prescription lens PL) obtained by the correction processing in step S17 is extracted, and the extracted progressive distribution is allocated on an outer surface and an inner surface of the prescription lens PL in accordance with a structure of the spectacle lens (an inner aspherical type, an outer aspherical type, a double-sided progressive type, a double-sided integrated type, and the like).

[S19 (Aspherical Correction in Consideration of Wearing State) in Fig. 3]

In step S19, for a shape of the prescription lens PL after the progressive distribution allocation in step S18, an aspherical correction amount in accordance with wearing conditions (e.g., a corneal to vertex distance, a forward inclination angle, a frame tilt angle, and the like) is calculated and added.

It should be noted that, after the aspherical correction is performed in consideration of the wearing state, a conventional spectacle lens also has an addition power curve different between right and left. However, in a case of a lens having a distance power of zero, such as a piano lens, aspherical correction in consideration of the wearing state is substantially unnecessary. Further, in a case of a lens having a weak distance power, a shape change due to aspherical correction in consideration of the wearing state is minor. Therefore, in the conventional spectacle lens, for items with a weak distance power among an item groups, the right and left addition power curves are kept substantially the same even after aspherical correction is performed.

On the other hand, in the spectacle lens according to this Example 1, by executing the correction processing in step S17, the addition power curve is different between right and left in all items included in an item group (all items suitable for each prescription), regardless of the right and left distance powers.

Through the above processing, the design of the prescription lens PL (design data of the spectacle lens) is completed. Hereinafter, the spectacle lens designed by the designing method of this Example 1 will be described with concrete numerical examples.

<<Numerical Example 1A>>

Numerical Example 1A has the following configuration.

· Numerical Example 1A

The distance eye point F (right) is 2 mm above the distance eye point F (left)

> Right lens: S 0.00 D, ADD 2.50 D, corridor length 14.11 mm
> Left lens: S 0.00 D, ADD 2.50 D, corridor length 13.89 mm

Numerical Example 1A is an example of a spectacle lens designed by the designing method of this Example 1, and is a concrete example in a case where height positions of the distance eye points F of the right and left lenses are different in a state of being mounted in a spectacle frame, and the distance power is zero. The corridor length of the right lens with a higher distance eye point F is longer than the corridor length of the left lens with a lower distance eye point F.

Fig. 7(a) shows an addition power curve on the main line of sight of the spectacle lens of Numerical Example 1A. The addition power curve in Fig. 7(a) is shown by the height position (unit: mm, indicated as "vertical coordinate of main line of sight" in the graph) of the main line of sight LL' on the spectacle lens and the addition power (unit: D). Fig. 7(a) shows each height position of the distance eye point F and the near eye point N for convenience of explanation. Further, in Fig. 7(a), the solid line shows the addition power curve on the main line of sight of the right lens, and the one-dotted chain line shows the addition power curve on the main line of sight of the left lens. It should be noted that, in Fig. 7(a), the height positions of the distance eye points F of the right and left lenses coincide with each other, but the right and left lenses are mounted in a frame such that the distance eye point F of the right lens is 2 mm above the distance eye point F of the left lens at a time of framing.

As shown in Fig. 7(a), in the spectacle lens of Numerical Example 1A, the height positions of the right and left near eye points N are different (a corridor length connecting the distance eye point F and the near eye point N is different between right and left). This is a design result for matching the addition effects of the right and left lenses in looking at the reference object surface.

Fig. 7(b) shows a relationship of a right/left difference (unit: mm) of a distance EPH and a corridor length (unit: mm) for the right lens (S 0.00 D, ADD 2.50 D) and the left lens (S 0.00 D, ADD 2.50 D). The solid line is a lens with a higher distance eye point F among the right and left lenses, and the one-dotted chain line is a lens with a lower distance eye point F among the right and left lenses. As shown in Fig. 7(b), as the right/left difference of the distance EPE is larger, the difference in the corridor length of the right and left lenses becomes larger. Further, among the right and left lenses, the corridor length is longer in a lens with a higher distance eye point F than for the other lens.

With reference to Figs. 8(a) and 8(b), a spectacle lens designed by the designing method of this Example 1 is compared with a spectacle lens designed by a conventional designing method. Fig. 8(a) is a view for explaining the spectacle lens of Numerical Example 1A, and Fig. 8(b) is a view for explaining a spectacle lens of Comparative Example A designed by a conventional designing method. In the spectacle lens of Comparative Example A, a lens having a layout symmetrical on right and left is mounted in a frame in accordance with a pupil height position of a wearer.

Comparative Example 1A has the following configuration.

• Comparative Example 1A

The distance eye point F (right) is 2 mm above the distance eye point F (left)

Right lens: S 0.00 D, ADD 2.50 D, corridor length 14.00 mm
Left lens: S 0.00 D, ADD 2.50 D, corridor length 14.00 mm

A horizontal axis of each of Figs. 8(a) and 8(b) shows tan $\alpha$. As shown in Fig. 6(a), an angle $\alpha$ is a vertical component of an angle formed by a horizontal line passing through a midpoint of the right and left eyeball rotation centers and a line connecting each point of the corridor. Further, as shown in Fig. 6(a), the angle $\alpha$ takes a positive value in a downward direction of the rotation direction, and takes a negative value in an upward direction of the rotation direction. The solid lines in Figs. 8(a) and 8(b) show a right/left difference (unit: mm) in the height position on the main line of sight LL' at tan $\alpha$ (vertical axis (right) in the figure). The one-dotted chain lines in Figs. 8(a) and 8(b) show a right/left difference (unit: D) of the addition power of each point on the main line of sight at tan $\alpha$ (vertical axis (left) in the figure).

As shown in Figs. 8(a) and 8(b), the spectacle lens of Comparative Example A has a large right/left difference in the addition power of each point of the corridor at tan $\alpha$ as compared with the spectacle lens of Numerical Example 1A. On the other hand, in the spectacle lens of Numerical Example 1A, since the corridor is designed on the basis of the virtual optical model reconstructed in step S16 in step S17 of Fig. 3, the right/left difference of the addition power of each point of the corridor at tan $\alpha$ becomes small. Furthermore, this right/left difference becomes smaller by processing of step S18 in Fig. 3.

«Numer_ical Example 1B»

Numerical Example 1B has the following configuration.

· Numerical Example 1B

The distance eye point F (right) is 2 mm above the distance eye point F (left)

Right lens: S +4.00 D, ADD 2.50 D, corridor length 14.14 mm
Left lens: S +4.00 D, ADD 2.50 D, corridor length 13.86 mm

Numerical Example 1B is an example of a spectacle lens designed by the designing method of this Example 1, and is a concrete example in a case where height positions of the distance eye points F of the right and left lenses are different in a state of being mounted in a spectacle frame, and the distance power is positive. The corridor length of the right lens with a higher distance eye point F is longer than the corridor length of the left lens with a lower distance eye point F.

Fig. 9(a) is a view similar to Fig. 7 (a), and shows an addition power curve in Numerical Example 1B of the spectacle lens according to this Example 1 of the present invention. Fig. 9(b) is a view similar to Fig. 7(b), and shows a relationship between a right/left difference (unit: mm) of a distance EPH and a corridor length (unit: mm) in Numerical Example 1B.

Figs. 10(a) and 10(b) are views similar to Figs. 8(a) and 8(b), respectively, and are views showing, regarding Numerical Example 1B and Comparative Example B, a right/left difference (unit: mm) of a height position on the main line of sight LL' at tan $\alpha$ and a right/left difference (unit: D) of an addition power at tan $\alpha$. The spectacle lenses of Numerical Example 1B and Comparative Example 3 are plus lenses having a positive distance power, and are designed on the basis of a same prescription value. A design difference between Numerical Example 1B and Comparative Example B is whether or not the designing method of this Example 1 is used for the design.

Comparative Example 3 has the following configuration.

• Comparative Example B

The distance eye point F (right) is 2 mm above the distance eye point F (left)

Right lens: S +4.00 D, ADD 2.50 D, corridor length 14.00 mm
Left lens: S +4.00 D, ADD 2.50 D, corridor length 14.00 mm

In the spectacle lens of Comparative Example B, similarly to Comparative Example A, a lens having a layout symmetrical on right and left is simply mounted in a frame in accordance with a pupil height position of a wearer. As shown in Figs. 10(a) and 10(b), the spectacle lens of Comparative Example B has a large right/left difference in the addition power of each point of the corridor at tan $\alpha$ as compared with the spectacle lens of Numerical Example 1B.

<<Numerical Example 1C>>

Numerical Example 1C has the following configuration.

· Numerical Example 1C

The distance eye point F (right) is 2 mm above the distance eye point F (left)

Right lens: S -3.00 D, ADD 2.50 D, corridor length 14.09 mm
Left lens: S -3.00 D, ADD 2.50 D, corridor length 13.91 mm

Numerical Example 1C is an example of a spectacle lens designed by the designing method of this Example 1, and is a concrete example in a case where height positions of the distance eye points F of the right and left lenses are different in a state of being mounted in a spectacle frame, and the distance power is negative. The corridor length of the right lens with a higher distance eye point F is longer than the corridor length of the left lens with a lower distance eye point F.

Fig. 11(a) is a view similar to Fig. 7 (a), and shows an addition power curve in Numerical Example 1C of the spectacle lens according to this Example 1. Fig. 11(b) is a view similar to Fig. 7(b), and shows a relationship between a right/left difference (unit: mm) of a distance EPH and a corridor length (unit: mm) in Numerical Example 1C.

Figs. 12(a) and 12(b) are views similar to Figs. 8(a) and 8(b), respectively, and are views showing, regarding Numerical Example 1C and Comparative Example C, a right/left difference (unit: mm) of a height position on the main line of sight LL' at tan $\alpha$ and a right/left difference (unit: D) of an addition power at tan $\alpha$. The spectacle lenses of Numerical Example 1C and Comparative Example C are minus lenses having a negative distance power, and are designed on the basis of a same prescription value. A design difference between Numerical Example 1C and Comparative Example C is whether or not the designing method of this Example 1 is used for the design.

Comparative Example C has the following configuration.

· Comparative Example C

The distance eye point F right) is 2 mm above the distance eye point F (left)

Right lens: S -3.00 D, ADD 2.50 D, corridor length 14.00 mm
Left lens: S -3.00 D, ADD 2.50 D, corridor length 14.00 mm

In the spectacle lens of Comparative Example C, similarly to Comparative Example A, a lens having a layout symmetrical on right and left is simply mounted in a frame in accordance with a pupil height position of a wearer. As shown in Figs. 12(a) and 12(b), the spectacle lens of Comparative Example C has a large right/left difference in the addition power of each point of the corridor at tan $\alpha$ as compared with the spectacle lens of Numerical Example 1C.

As described above, in the spectacle lenses of Numerical Examples 1A, 1B, and 1C designed by the designing method of this Example 1, in a state where the spectacle lens is in a frame, the height position of the distance eye point of the right lens is different from the height position of the distance eye point of the left lens, and the corridor length of the right lens is different from the corridor length of the left lens. By designing such that the corridor length of the right lens is different from the corridor length of the left lens, a difference between the right and left addition powers on the corridor can be suppressed. That is, the difference in the right and left addition effects acting on wearer's eyes can be suppressed.

[Example 2]

When a wearer with anisometropia (different visual acuity between right and left) looks at a near object point with both eyes, a deviation occurs in right and left visual line directions due to a difference between right and left prismatic effects according to the prescription power difference. Therefore, positions through which the left and right visual lines pass on the lens are respectively different from positions assumed by the design.

In this Example 2, a description will be given to a design of the spectacle lens considering anisometropia additionally with Example 1 above. That is, in this Example 2, a description will be given to a design of a spectacle lens corresponding to a wearer having a height position of a distance eye point different between right and left and having anisometropia.

Fig. 13 is a flowchart showing an operation in which the spectacle lens designing computer 202 creates lens design data in Example 2 of the present invention. It should be noted that, in the following examples, redundant explanations with those of the above-described examples will be appropriately simplified or omitted.

[S21 (Setting of Reference Lens) in Fig. 13]

In step S21, a reference lens BL common to right and left is set similarly to step S11 (Fig. 3) of Example 1 above. However, in step S21 of this Example 2, a distance power is set to a same value for the right and left reference lenses BL.

Consider a case, for example, where prescription values are as follows:

Right lens: S +2.00 ADD 2.50
Left lens: S +4.00 ADD 2.50

In this case, a same value obtained by averaging the distance powers of the right and left reference lenses BL may be set as shown below.

Right lens: S +3.00 ADD 2.50
Left lens: S +3.00 ADD 2.50

It should be noted that, without limiting to this, a same value may be set on right and left by setting the distance power of the right and left reference lenses BL to either one value of right and left of the wearer. For example, the distance power of the right and left reference lenses BL may be set to a prescription value of the wearer's dominant eye. Further, the distance power of the right and left reference lenses BL may be set to a higher value of the right and left prescription values.

[S22 to S29 in Fig. 13]

In step S22, processing similar to that of step S12 in Fig. 3 is performed. Meanwhile, also in step S22, the height positions of the eyeball models $E_R$ and $E_L$ may be determined by averaging height positions of the actual right and left pupils of the wearer. Further, without changing one height position of the right and left eyeball models, the height positions of the right and left eyeball models may be made equal by shifting the other height position upward or downward. In this case, among the right and left eyeball models, without changing a height position of the eyeball model of the wearer's dominant eye, the other height position may be shifted upward or downward. Further, among right and left eyeball models, without changing the height position of the eyeball model with a higher distance power of the wearer, the other height position may be shifted upward or downward.

In steps S23 to S26, processing similar to that of steps S12 to S16 of Fig. 3 is performed.

However, in step S22, a virtual optical model is constructed on the basis of the reference lens BL that has been set in step S21 and has a same value of the right and left distance powers, and in step S23, the reference object surface is set on the basis of the virtual optical model that has been set in step S22.

In step S24, different right and left distance powers are set on the basis of wearer's prescription information. Then, in step S25, the virtual optical model constructed in step S22 is changed to a virtual optical model including the eyeball model E and the prescription lens PL that has been set in step S24, assuming a state where the wearer actually wears the lens. Then, in step S26, for each of the right and left prescription lenses, ray tracing processing is performed on the basis of the virtual optical model that has been reconstructed in step S25 and the reference object surface that has been set in step S23, and the corridor of the prescription lens PL is determined. It should be noted that, as the right/left difference in the distance power between the right and left is larger, the right/left difference of the corridor length becomes larger.

Meanwhile, for correction of the corridor length and the addition power curve for anisometropia, for example, the method described in Patent Literature 2 may be applied.

In steps S27 to S29, processing similar to that of steps S17 to S19 of Fig. 3 is performed.

<<Numerical Example 2D>>

Numerical Example 2D has the following configuration.

· Numerical Example 2D

The distance eye point F (right) is 2 mm above the distance eye point F (left)

Right lens: S +5.00 D, ADD 2.50 D, corridor length 14.52 mm
Left lens: S +3.00 D, ADD 2.50 D, corridor length 13.48 mm

Numerical Example 2D is an example of a spectacle lens designed by the designing method of this Example 2, and is a concrete example in a case where height positions of the distance eye points F of the right and left lenses are different and the distance power is different between right and left in a state of being mounted in a spectacle frame, and the distance power is positive. The corridor length of the right lens with a higher distance eye point F is longer than the corridor length of the left lens with a lower distance eye point F.

Fig. 14(a) is a view similar to Fig. 7 (a), and shows an addition power curve in Numerical Example 2D of a spectacle lens according to this Example 2. Fig. 14(b) is a view similar to Fig. 7(b), and shows a relationship between a right/left difference (unit: mm) of a distance EPH and a corridor length (unit: mm) in Numerical Example 2D.

Figs. 15(a) and 15(b) are views similar to Figs. 8(a) and 8(b), respectively, and are views showing, regarding Numerical Example 2D and Comparative Example D, a right/left difference (unit: mm) of a height position on the main line of sight LL' at tan $\alpha$ and a right/left difference (unit: D) of an addition power at tan $\alpha$. The spectacle lenses of Numerical Example 2D and Comparative Example D are plus lenses having a positive distance power, and are designed on the basis of a same prescription value. A design difference between Numerical Example 2D and Comparative Example D is whether or not the designing method of this Example 2 is used for the design.

Comparative Example D has the following configuration.

· Comparative Example D

The distance eye point F (right) is 2 mm above the distance eye point F (left)

Right lens: S +5.00 D, ADD 2.50 D, corridor length 14.42 mm
Left lens: S +3.00 D, ADD 2.50 D, corridor length 13.58 mm

The spectacle lens according to Comparative Example D is a lens whose corridor length is made different between right and left in consideration of anisometropia is mounted in a frame in accordance with a pupil height position of a wearer.

As shown in Figs. 15(a) and 15(b), the spectacle lens of Comparative Example D has a large right/left difference in the addition power of each point of the corridor at tan α as compared with the spectacle lens of Numerical Example 2D.

<<Numerical Example 2E>>

Numerical Example 2E has the following configuration.

· Numerical Example 2E

The distance eye point F (right) is 2 mm above the distance eye point F (left)

Right lens: S -2.00 D, ADD 2.50 D, corridor length 14.45 mm
Left lens: S -4.00 D, ADD 2.50 D, corridor length 13.55 mm

Numerical Example 2E is an example of a spectacle lens designed by the designing method of this Example 2, and is a concrete example in a case where height positions of the distance eye points F of the right and left lenses are different and the distance power is different between right and left in a state of being mounted in a spectacle frame, and the distance power is negative. The corridor length of the right lens with a higher distance eye point F is longer than the corridor length of the left lens with a lower distance eye point F.
Fig. 16(a) is a view similar to Fig. 7 (a), and shows an addition power curve in Numerical Example 2E of the spectacle lens according to this Example 2. Fig. 16(b) is a view similar to Fig. 7(b), and shows a relationship between a right/left difference (unit: mm) of a distance EPH and a corridor length (unit: mm) in Numerical Example 2E.
Figs. 17(a) and 17(b) are views similar to Figs. 8(a) and 8(b), respectively, and are views showing, regarding Numerical Example 2E and Comparative Example E, a right/left difference (unit: mm) of a height position on the main line of sight LL' at tan α and a right/left difference (unit: D) of an addition power at tan α. The spectacle lenses of Numerical Example 2E and Comparative Example E are minus lenses having a negative distance power, and are designed on the basis of a same prescription value. A design difference between Numerical Example 2E and Comparative Example E is whether or not the designing method of this Example 2 is used for the design.
Comparative Example F has the following configuration.

· Comparative Example E

The distance eye point F (right) is 2 mm above the distance eye point F (left)

Right lens: S -2.00 D, ADD 2.50 D, corridor length 14.54 mm
Left lens: S -4.00 D, ADD 2.50 D, corridor length 13.46 mm

In the spectacle lens according to Comparative Example E, similarly to that in Comparative Example D, a lens having a layout asymmetrical on right and left whose corridor length and addition power curve are corrected in consideration of anisometropia is mounted in a frame in accordance with a pupil height position of a wearer.
As shown in Figs. 17(a) and 17(b), the spectacle lens of Comparative Example E has a large right/left difference in the addition power of each point of the corridor at tan α as compared with the spectacle lens of Numerical Example 2E.
As described above, in the spectacle lenses of Numerical Examples 2D and 2E designed by the designing method of this Example 2, in a state where the spectacle lens is in a frame, the height position of the distance eye point of the right lens is different from the height position of the distance eye point of the left lens, and the corridor length of the right lens is different from the corridor length of the left lens. By designing such that the corridor length of the right lens is different from the corridor length of the left lens, a difference between the right and left addition powers on the corridor can be suppressed. That is, the difference in the right and left addition effects acting on wearer's eyes can be suppressed.

[Example 3]

In this Example 3, a description will be given to a design of the spectacle lens also considering astigmatism additionally with this Example 2. Fig. 18 is a flowchart showing an operation in which the spectacle lens designing computer 202 creates lens design data in Example 3 of the present invention.

[S31 (Setting of Reference Lens) in Fig. 18]

In step S31, a reference lens BL common to right and left is set on the basis of wearer's prescription values received from the storefront computer 100 via the host computer 200. The reference lens BL in step S31 is designed at least on the basis of a distance power, an addition power, and a corridor length, as prescription information. The reference lens BL in step S31 is a virtually set lens similar to the reference lens BL in step S11 of Fig. 3, and is a progressive addition lens common to right and left. However, the reference lens BL in step S31 is a spectacle lens having a power component in a longitudinal direction of a distance portion as the distance power (spherical power), and is a spectacle lens from which an astigmatism component is excluded, and the distance power is set to a same value for the right and left reference lenses. Meanwhile, a center thickness of the reference lens BL in step S31 is determined on the basis of prescription information, a refractive index of a glass material, and the like.

Here, a method of setting the reference lens BL in step S31 will be described. Consider a case, for example, where prescription values are as follows:

Right lens: S +3.00, C -2.00, AX 45, ADD 2.50
Left lens: S +6.00, C -4.00, AX 45, ADD 2.50

In this case, first, according to the following Euler formula, S +2.00 is obtained as a power component in a longitudinal direction of the distance portion of the right lens, and S +4.00 is obtained as a power component in a longitudinal direction of the distance portion of the left lens.

Right lens: S +2.00, ADD 2.50
Left lens: S +4.00, ADD 2.50

(Euler formula)

$$D\theta = Db \cdot Cos^2\theta + Dc \cdot Sin^2\theta$$

Db: Base curve
De: Cross curve
$\theta$: Any declination from a cylindrical axial direction (base direction)
$D\theta$: Curve at $\theta$

Subsequently, a same value obtained by averaging the distance powers of the right and left reference lenses BL is set as shown below.

Right lens: S +3.00, ADD 2.50
Left lens: S +3.00, ADD 2.50

[S32 to S39 in Fig. 18]

In steps S32 to S36, processing similar to that of the steps S22 to S26 in Fig. 13 is performed.
However, in step S32, a virtual optical model is constructed on the basis of the reference lens BL that has been set in step S31 and has a same value of the right and left distance powers. Then, in step S33, the reference object surface is set on the basis of the virtual optical model that has been set in step S22.
In step S34, distance powers (including astigmatic power) that are different between right and left are set on the basis of wearer's prescription information. Then, in step S35, the virtual optical model constructed in step S32 is changed to a virtual optical model including the eyeball model F and the prescription lens PL that has been set in step S34, assuming a state where the wearer actually wears the lens. Then, in step S36, for each of the right and left prescription lenses PL, ray tracing processing is performed on the basis of the virtual optical model that has been reconstructed in step S35 and the reference object surface that has been set in step S33, and the corridor of the prescription lens is determined.
Meanwhile, for correction of the corridor length and the addition power curve for astigmatism and anisometropia, for example, the method described in Patent Literature 2 may be applied.
In steps S37 to S39, processing similar to that of steps S17 to S19 of Fig. 3 is performed.

<<Numerical Example 3F>>

Numerical Example 3F has the following configuration.

· Numerical Example 3F

The distance eye point F (right) is 2 mm above the distance eye point F (left)

Right lens: S -1.25, C -1.00, AX 160, ADD 2.50, corridor length 14.50 mm
Left lens: S -1.75, C -1.50, AX 10, ADD 2.50, corridor length 13.50 mm

Numerical Example 3F is an example of a spectacle lens designed by the designing method of this Example 3, and is a concrete example of an astigmatism spectacle lens in which height positions of the distance eye points F of the right and left lenses are different and the distance power is different between right and left in a state of being mounted in a spectacle frame. The corridor length of the right lens with a higher distance eye point F is longer than the corridor length of the left lens with a lower distance eye point F.
Fig. 19(a) is a view similar to Fig. 7 (a), and shows an addition power curve in Numerical Example 3F of a spectacle lens according to this Example 3. Fig. 19(b) is a view similar to Fig. 7(b), and shows a relationship between a right/left difference (unit: mm) of a distance EPH and a corridor length (unit: mm) in Numerical Example 3F.
Figs. 20(a) and 20(b) are views similar to Figs. 8(a) and 8(b), respectively, and are views showing, regarding Numerical Example 3F and Comparative Example F, a right/left difference (unit: mm) of a height position on the main line of sight LL' at tan $\alpha$ and a right/left difference (unit: D) of an addition power at tan $\alpha$. The spectacle lenses of Numerical Example 3F and Comparative Example F are astigmatism spectacle lenses, and are designed on the basis of a same prescription value. A design difference between Numerical Example 3F and Comparative Example F is whether or not the designing method of this Example 3 is used for the design.
Comparative Example F has the following configuration.

· Comparative Example F

The distance eye point F (right) is 2 mm above the distance eye point F (left)

Right lens: S -1.25, C -1.00, AX 160, ADD 2.50, corridor length 14.40 mm
Left lens: S -1.75, C -1.50, AX 10, ADD 2.50, corridor length 13.60 mm

In the spectacle lens according to Comparative Example F, a lens having a layout asymmetrical on right and left whose corridor length and addition power curve are corrected in consideration of astigmatism and anisometropia and is mounted in a frame in accordance with a pupil height position of a wearer.

As shown in Figs. 20(a) and 20(b), the spectacle lens of Comparative Example F has a large right/left difference in the addition power of each point of the corridor at tan $\alpha$ as compared with the spectacle lens of Numerical Example 3F.

As described above, in the spectacle lens of Numerical Examples 3F designed by the designing method of this Example 3, in a state where the spectacle lens is in a frame, the height position of the distance eye point of the right lens is different from the height position of the distance eye point of the left lens, and the corridor length of the right lens is different from the corridor length of the left lens. By designing such that the corridor length of the right lens is different from the corridor length of the left lens, a difference between the right and left addition powers on the corridor can be suppressed. That is, the difference in the right and left addition effects acting on wearer's eyes can be suppressed.

The foregoing is a description of exemplary embodiments of the present invention. The embodiments of the present invention are not limited to those described above, and various modifications are possible within the scope of the present invention. For example, the embodiments of the current application also include contents of appropriate combination of the embodiments and modifications exemplarily indicated in the specification

For example, in Example 3 above, the design of the spectacle lens corresponding to a wearer having astigmatism and anisometropia and having a pupil height position different between right and left has been described. However, a design of a spectacle lens corresponding to a wearer having astigmatic and having a pupil height position different between right and left (that is, a wearer without anisometropia with respect to Example 3) is also within the scope of the present invention.

Further, in the designing method of Example 1 above, the corridor is determined by ray tracing at step S16 and then the corridor is corrected in step S17, but step S17 may be omitted. Similarly, also in the designing methods of Examples 2 and 3 above, steps S27 and S37 may be omitted.

**Claims**

1. A spectacle lens producing apparatus for producing a pair of right and left spectacle lenses each including:

   a distance vision region, a near vision region, and a progressive region in which a refractive power progressively changes between the distance vision region and the near vision region, the spectacle lens producing apparatus comprising:

   a reference lens setting means to set a reference lens (BL,$BL_R$, $BL_L$) common to right and left, based on prescription information of a wearer;
   a reference object surface setting means to set a reference object surface formed of a plurality of object points (P) arranged at different object distances based on the reference lens (BL, $BL_R$, $BL_L$) on right and left; and
   a designing means to set right and left prescription lenses (PL, $PL_R$, $PL_L$), based on prescription information of the wearer, such that a height position of a distance eye point (F) that is a reference point of the distance vision region is different between right and left, in a state of being mounted in a spectacle frame, in accordance with a right/left difference of pupil height position of the wearer, and design, for each prescription lens (PL, $PL_R$, $PL_L$) of the set right and left prescription lenses (PL, $PL_R$, $PL_L$), a corridor of the prescription lens (PL, $PL_R$, $PL_L$) based on a principal ray from each object point (P) on the reference object surface so that the corridor length with a higher distance eye point is longer than the corridor length with a lower distance eye point.

2. The spectacle lens producing apparatus according to claim 1, further comprising:
   a correction means to correct a corridor of at least one of right and left prescription lenses (PL, $PL_R$, $PL_L$) designed by the designing means to reduce a difference between right and left addition effects on the corridor.

3. The spectacle lens producing apparatus according to claim 2, wherein
   the correction means shifts a height position of a near eye point (N) of one prescription lens (PL, $PL_R$, $PL_L$) among the right and left prescription lenses (PL, $PL_R$, $PL_L$) to be close to a height position of a near eye point (N) of another prescription lens (PL, $PL_R$, $PL_L$), along the corridor.

4. The spectacle lens producing apparatus according to claim 2, wherein
the correction means corrects at least one of an addition power curve indicating an addition power of a corridor of the left prescription lens ($PL_L$) or an addition power curve indicating an addition power of a corridor of the right prescription lens (PL, $PL_R$, $PL_L$), such that the addition power curves approach each other.

5. The spectacle lens producing apparatus according to claim 4, wherein
the addition power curve corresponding to the left prescription lens ($PL_L$) and the addition power curve corresponding to the right prescription lens ($PL_R$) are viewing-angle-based addition power curves to the reference object surface on the corridor of the left prescription lens ($PL_L$) and the right prescription lens ($PL_R$), respectively.

6. The spectacle lens producing apparatus according to any one of claims 1 to 5, wherein
the designing means estimates, for each prescription lens (PL, $PL_R$, $PL_L$) of the set right and left prescription lenses (PL, $PL_R$, $PL_L$), a passing position on the prescription lens (PL, $PL_R$, $PL_L$) of a ray connecting each object point (P) on the reference object surface and an eyeball, calculates an addition power of each estimated passing position based on prescription information of the wearer, and designs the corridor.

7. The spectacle lens producing apparatus according to claim 6, wherein

the reference object surface designing means constructs a first virtual optical model including the reference lens (BL, $BL_R$, $BL_L$) on right and left, and right and left eyeball models (E, $E_R$, $E_L$) of the wearer, and designs the reference object surface based on the constructed first virtual optical model;
in the first virtual optical model, a height position of the distance eye point (F) of the reference lens (BL, $BL_R$, $BL_L$) on right and left is equal between right and left,
the designing means constructs a second virtual optical model including the right and left prescription lenses (PL, $PL_R$, $PL_L$) and right and left eyeball models (E, $E_R$, $E_L$) of the wearer, and designs the corridor based on the constructed second virtual optical model;
in the second virtual optical model,
a height position of the distance eye point (F) of the right and left prescription lenses (PL, $PL_R$, $PL_L$) is different between right and left, and a pupil height position of the right and left eyeball models (E, $E_R$, $E_L$) is different between right and left; and
the designing means estimates, for each prescription lens (PL, $PL_R$, $PL_L$) of the right and left prescription lenses (PL, $PL_R$, $PL_L$), a passing position on the prescription lens (PL, $PL_R$, $PL_L$) of a ray connecting each object point (P) on the reference obj ect surface and each of the right and left eyeball models (E, $E_R$, $E_L$) of the second virtual optical model.

8. A computer-implemented spectacle lens designing method for designing a pair of right and left spectacle lenses for the purpose of using the resulting design for the manufacturing of the pair of left and right spectacle lenses, each including a distance vision region, a near vision region and a progressive region in which a refractive power progressively changes between the distance vision region and the near vision region,
the spectacle lens designing method comprising:

a reference lens setting step of setting a reference lens (BL, $BL_R$, $BL_L$) common to right and left based on prescription information of a wearer ;
a reference object surface setting step of setting a reference object surface formed of a plurality of object points (P) arranged at different object distances based on the reference lens (BL, $BL_R$, $BL_L$) on right and left; and
a designing step of setting right and left prescription lenses (PL, $PL_R$, $PL_L$) such that a height position of a distance eye point (F) that is a reference point of the distance vision region is different between right and left, in a state of being mounted in a spectacle frame, in accordance with a right/left difference of pupil height position of the wearer,
and designing, for each prescription lens (PL, $PL_R$, $PL_L$) of the set right and left prescription lenses (PL, $PL_R$, $PL_L$), a corridor of the prescription lens (PL, $PL_R$, $PL_L$) based on a principal ray from each object point (P) on the reference object surface, so that the corridor length with a higher distance eye point is longer than the corridor length with a lower distance eye point.

9. A spectacle lens designing program for designing a pair of right and left spectacle lenses, for the purpose of using the resulting design for the manufacturing of the pair of left and right spectacle lenses, each lense including a distance vision region, a near vision region and a progressive region in which a refractive power progressively changes between the distance vision region and the near vision region,
the spectacle lens designing program causing a computer to execute:

a reference lens setting step of setting a reference lens (BL, $BL_R$, $BL_L$) common to right and left based on prescription information of a wearer;

a reference object surface setting step of setting a reference object surface formed of a plurality of object points (P) arranged at different object distances based on the reference lens (BL, $BL_R$, $BL_L$) on right and left; and

a designing step of setting right and left prescription lenses (PL, $PL_R$, $PL_L$) such that a height position of a distance eye point (F) that is a reference point of the distance vision region is different between right and left, in a state of being mounted in a spectacle frame, in accordance with a right/left difference of pupil height position of the wearer,

and designing, for each prescription lens (PL, $PL_R$, $PL_L$) of the set right and left prescription lenses (PL, $PL_R$, $PL_L$), a corridor of the prescription lens (PL, $PL_R$, $PL_L$) based on a principal ray from each object point (P) on the reference object surface, so that the corridor length with a higher distance eye point is longer than the corridor length with a lower distance eye point.

## Patentansprüche

1. Brillenglasherstellungsgerät zur Herstellung eines Paars von einem rechten und einem linken Brillenglas, die jeweils umfassen:
eine Fernsichtregion, eine Nahsichtregion und eine Progressionsregion, in der sich eine Brechungswirkung progressiv ändert, zwischen der Fernsichtregion und der Nahsichtregion, wobei das Brillenglasherstellungsgerät umfasst:

eine Referenzglaseinstelleinrichtung zum Einstellen eines gemeinsamen Referenzglases (BL, $BL_R$, $BL_L$) für rechts und links basierend auf Verschreibungsinformationen eines Trägers;
eine Referenzobjektoberflächeneinstelleinrichtung zum Einstellen einer Referenzobjektoberfläche, die aus einer Mehrzahl von Objektpunkten (P) gebildet ist, die bei verschiedenen Objektabständen angeordnet sind, basierend auf dem Referenzglas (BL, $BL_R$, BLL) bei rechts und links; und
eine Entwurfseinrichtung zum Einstellen eines rechten und eines linken Verschreibungsglases (PL, $PL_R$, $PL_L$) basierend auf Verschreibungsinformationen des Trägers derart, dass eine Höhenposition eines Fernaugenpunkts (F), der ein Referenzpunkt der Fernsichtregion ist, verschieden ist zwischen rechts und links in einem Zustand der Montage in einem Brillengestell in Übereinstimmung mit einer rechts/ links- Differenz einer Pupillenhöhenposition des Trägers, und zum Entwerfen, für jedes Verschreibungsglas (PL, $PL_R$, $PL_L$) des eingestellten rechten und linken Verschreibungsglases (PL, $PL_R$, $PL_L$), eines Korridors des Verschreibungsglases (PL, $PL_R$, $PL_L$) basierend auf einem Hauptstrahl von jedem Objektpunkt (P) auf der Referenzobjektoberfläche derart, dass die Korridorlänge mit einem höheren Fernaugenpunkt länger ist als die Korridorlänge mit einem niedrigeren Fernaugenpunkt.

2. Brillenglasherstellungsgerät nach Anspruch 1, ferner umfassend:
eine Korrektureinrichtung zum Korrigieren eines Korridors eines rechten und/ oder eines linken Verschreibungsglases (PL, $PL_R$, $PL_L$), die durch die Entwurfseinrichtung entworfen sind, um eine Differenz zwischen einem rechten und einem linken Additionseffekt auf dem Korridor zu reduzieren.

3. Brillenglasherstellungsgerät nach Anspruch 2, wobei
die Korrektureinrichtung eine Höhenposition eines Nahaugenpunkts (N) eines Verschreibungsglases (PL, $PL_R$, $PL_L$) von dem rechten und dem linken Verschreibungsglas (PL, $PL_R$, $PL_L$) derart verschiebt, dass er nahe einer Höhenposition eines Nahaugenpunkts (N) eines anderen Verschreibungsglases (PL, $PL_R$, $PL_L$) ist, und zwar entlang des Korridors.

4. Brillenglasherstellungsgerät nach Anspruch 2, wobei
die Korrektureinrichtung eine Additionswirkungskurve, die eine Additionswirkung eines Korridors des linken Verschreibungsglases ($PL_L$) angibt, und/ oder eine Additionswirkungskurve, die eine Additionswirkung eines Korridors des rechten Verschreibungsglases (PL, $PL_R$, $PL_L$) angibt, derart korrigiert, dass sich die Additionswirkungskurven einander annähern.

5. Brillenglasherstellungsgerät nach Anspruch 4, wobei
die Additionswirkungskurve entsprechend dem linken Verschreibungsglas ($PL_L$) und die Additionswirkungskurve entsprechend dem rechten Verschreibungsglas ($PL_R$) sichtwinkelbasierte Additionswirkungskurven zu der Referenzobjektoberfläche auf dem Korridor des linken Verschreibungsglases ($PL_L$) beziehungsweise des rechten Verschreibungsglases ($PL_R$) sind.

6. Brillenglasherstellungsgerät nach einem der Ansprüche 1 bis 5, wobei die Entwurfseinrichtung für jedes Verschreibungsglas (PL, $PL_R$, $PL_L$) des eingestellten rechten und linken Verschreibungsglases (PL, $PL_R$, $PL_L$) eine Durchtrittposition auf dem Verschreibungsglas (PL, PL$_R$, PL$_L$) eines Strahls abschätzt, der jeden Objektpunkt (P) auf der Referenzobjektoberfläche und einen Augapfel verbindet, eine Additionswirkung jeder abgeschätzten Durchtrittposition basierend auf Verschreibungsinformationen des Trägers berechnet, und den Korridor entwirft.

7. Brillenglasherstellungsgerät nach Anspruch 6, wobei

die Referenzobjektoberflächenentwurfseinrichtung ein erstes virtuelles optisches Modell konstruiert, einschließlich des Referenzglases (BL, BL$_R$, BL$_L$) bei rechts und links, und ein rechtes und ein linkes Augapfelmodell (E, E$_R$, E$_L$) des Trägers, und die Referenzobjektoberfläche basierend auf dem konstruierten ersten virtuellen optischen Modell entwirft;
in dem ersten virtuellen optischen Modell eine Höhenposition des Fernaugenpunkts (F) des Referenzglases (BL, BL$_R$, BL$_L$) bei rechts und links zwischen rechts und links gleich ist,
die Entwurfseinrichtung ein zweites virtuelles optisches Modell konstruiert, einschließlich des rechten und des linken Verschreibungsglases (PL, PL$_R$, PL$_L$) und eines rechten und eines linken Augapfelmodells (E, E$_R$, E$_L$) des Trägers, und den Korridor basierend auf dem konstruierten zweiten virtuellen optischen Modell entwirft;
in dem zweiten virtuellen optischen Modell, eine Höhenposition des Fernaugenpunkts (F) des rechten und des linken Verschreibungsglases (PL, PL$_R$, PL$_L$) zwischen rechts und links verschieden ist, und eine Pupillenhöhenposition des rechten und des linken Augapfelmodells (E, E$_R$, E$_L$) zwischen rechts und links verschieden ist; und
die Entwurfseinrichtung für jedes Verschreibungsglas (PL, PL$_R$, PL$_L$) von dem rechten und dem linken Verschreibungsglas (PL, PL$_R$, PL$_L$) eine Durchtrittsposition auf dem Verschreibungsglas (PL, PL$_R$, PL$_L$) eines Strahls abschätzt, der jeden Objektpunkt (P) auf der Referenzobjektoberfläche und jedes von dem rechten und dem linken Augapfelmodell (E, E$_R$, E$_L$) des zweiten virtuellen optischen Modells verbindet.

8. Computerimplementiertes Brillenglasentwurfsverfahren zum Entwerfen eines Paars von einem rechten und einem linken Brillenglas zum Zweck der Verwendung des resultierenden Entwurfs für die Herstellung des Paars von einem linken und einem rechten Brillenglas, die jeweils eine Fernsichtregion, eine Nahsichtregion und eine Progressionsregion, in der sich eine Brechungswirkung progressiv ändert, zwischen der Fernsichtregion und der Nahsichtregion umfassen,
wobei das Brillenglasentwurfsverfahren umfasst:

einen Referenzglaseinstellschritt des Einstellens eines gemeinsamen Referenzglases (BL, BL$_R$, BL$_L$) für rechts und links basierend auf Verschreibungsinformationen eines Trägers;
einen Referenzobjektoberflächeneinstellschritt des Einstellens einer Referenzobjektoberfläche, die aus einer Mehrzahl von Objektpunkten (P) gebildet ist, die bei verschiedenen Objektabständen angeordnet sind, basierend auf dem Referenzglas (BL, BL$_R$, BL$_L$) bei rechts und links; und
einen Entwurfsschritt des Einstellens eines rechten und eines linken Verschreibungsglases (PL, PL$_R$, PL$_L$) derart, dass eine Höhenposition eines Fernaugenpunkts (F), der ein Referenzpunkt der Fernsichtregion ist, zwischen rechts und links in einem Zustand der Montage in einem Brillengestell verschieden ist, in Übereinstimmung mit einer rechts/ links- Differenz der Pupillenhöhenposition des Trägers;
und Entwerfen, für jedes Verschreibungsglas (PL, PL$_R$, PL$_L$) des eingestellten rechten und linken Verschreibungsglases (PL, PL$_R$, PL$_L$), eines Korridors des Verschreibungsglases (PL, PL$_R$, PL$_L$) basierend auf einem Hauptstrahl von jedem Objektpunkt (P) auf der Referenzobjektoberfläche derart, dass die Korridorlänge mit einem höheren Fernaugenpunkt länger ist als die Korridorlänge mit einem niedrigeren Fernaugenpunkt.

9. Brillenglasentwurfsprogramm zum Entwerfen eines Paars von einem rechten und einem linken Brillenglas zum Zweck der Verwendung des resultierenden Entwurfs für die Herstellung des Paars von einem linken und einem rechten Brillenglas, wobei jedes Glas eine Fernsichtregion, einen Nahsichtregion und eine Progressionsregion, in der sich eine Brechungswirkung progressiv ändert, zwischen der Fernsichtregion und der Nahsichtregion umfasst, wobei das Brillenglasentwurfsprogram einen Computer veranlasst, folgendes auszuführen:

einen Referenzglaseinstellschritt des Einstellens eines gemeinsamen Referenzglases (BL, BL$_R$, BL$_L$) für rechts und links basierend auf Verschreibungsinformationen eines Trägers;
einen Referenzobjektoberflächeneinstellschritt des Einstellens einer Referenzobjektoberfläche, die aus einer Mehrzahl von Objektpunkten (P) gebildet ist, die bei verschiedenen Objektabständen angeordnet sind, basierend auf dem Referenzglas (BL, BL$_R$, BL$_L$) bei rechts und links; und
einen Entwurfsschritt des Einstellens eines rechten und eines linken Verschreibungsglases (PL, $PL_R$, $PL_L$) derart, dass eine Höhenposition eines Fernaugenpunkts (F), der ein Referenzpunkt der Fernsichtregion ist, zwischen rechts und links in einem Zustand der Montage in einem Brillengestell verschieden ist, in Übereinstimmung mit einer Rechts! Linksdifferenz der Pupillenhöhenposition des Trägers;

und Entwerfen, für jedes Verschreibungsglas (PL, $PL_R$, $PL_L$) des eingestellten rechten und linken Verschreibungsglases (PL, $PL_R$, $PL_L$), eines Korridors des Verschreibungsglases (PL, $PL_R$, $PL_L$) basierend auf einem Hauptstrahl von jedem Objektpunkt (P) auf der Referenzobjektoberfläche derart, dass die Korridorlänge mit einem höheren Fernaugenpunkt länger ist als die Korridorlänge mit einem niedrigeren Fernaugenpunkt.

## Revendications

1. Un appareil de production de verres de lunettes pour produire une paire de verres de lunettes droit et gauche comprenant chacun :
une zone de vision de loin, une zone de vision de près et une zone progressive dans laquelle une puissance réfractive change progressivement entre la zone de vision de loin et la zone de vision de près, l'appareil de production de verres de lunettes comprenant :

un moyen de réglage de verre de référence pour définir un verre de référence (BL, $BL_R$, $BL_L$) commun à droite et à gauche, sur la base d'informations de prescription d'un porteur ;
un moyen de définition de surface d'objet de référence pour définir une surface d'objet de référence formée d'une pluralité de points d'objet (P) disposés à différentes distances d'objet sur la base du verre de référence (BL, $BL_R$, $BL_L$) à droite et à gauche ; et
un moyen de conception pour régler des verres correcteurs droit et gauche (PL, $PL_R$, $PL_L$), sur la base d'informations de prescription du porteur, de telle sorte qu'une position en hauteur d'un point oculaire à distance (F), qui est un point de référence de la zone de vision de loin, est différent entre la droite et la gauche, dans un état de montage dans une monture de lunettes, en fonction d'une différence droite/gauche de position de hauteur de pupille du porteur, et de conception, pour chaque verre correcteur (PL, $PL_R$, $PL_L$) des verres correcteurs droit et gauche (PL, $PL_R$, $PL_L$) définis, d'un couloir du verre correcteur (PL, $PL_R$, $PL_L$) basé sur un rayon principal provenant de chaque point objet (P) sur la surface de l'objet de référence de sorte que la longueur du couloir avec un point oculaire à plus grande distance est plus longue que la longueur du couloir avec un point oculaire à distance inférieure.

2. L'appareil de production de verres de lunettes selon la revendication 1, comprenant en outre :
un moyen de correction pour corriger un couloir d'au moins un parmi un verre correcteur droit et un verre correcteur gauche (PL, $PL_R$, $PL_L$) conçu par le moyen de conception pour réduire une différence entre les effets d'addition droit et gauche sur le couloir.

3. L'appareil de production de verres de lunettes selon la revendication 2, dans lequel le moyen de correction décale une position en hauteur d'un point proche de l'oeil (N) d'un verre correcteur (PL, $PL_R$, $PL_L$) parmi les verres correcteurs droit et gauche (PL, PLR), $PL_L$) pour être proche d'une position en hauteur d'un point proche de l'oeil (N) d'un autre verre correcteur (PL, $PL_R$, $PL_L$), le long du couloir.

4. L'appareil de production de verres de lunettes selon la revendication 2, dans lequel le moyen de correction corrigent au moins une parmi une courbe de puissance d'addition indiquant une puissance d'addition d'un couloir du verre correcteur gauche ($PL_L$) ou une courbe de puissance d'addition indiquant une puissance d'addition d'un couloir du verre correcteur droit (PL, $PL_R$, $PL_L$), de telle sorte que les courbes de puissance d'addition se rapprochent l'une de l'autre.

5. L'appareil de production de verres de lunettes selon la revendication 4, dans lequel la courbe de puissance d'addition correspondant au verre correcteur gauche ($PL_L$) et la courbe de puissance d'addition correspondant au verre correcteur droit ($PL_R$) sont des courbes de puissance d'addition basées sur l'angle de vision pour la surface de l'objet de référence sur le couloir du verre correcteur gauche ($PL_L$) et du verre correcteur droit ($PL_R$), respectivement.

6. L'appareil de production de verres de lunettes selon l'une quelconque des revendications 1 à 5, dans lequel le moyen de conception estime, pour chaque verre correcteur (PL, $PL_R$, $PL_L$) des verres correcteurs droit et gauche (PL, $PL_R$, $PL_L$) définis, une position de passage sur le verre correcteur (PL, $PL_R$, $PL_L$) d'un rayon reliant chaque point objet (P) sur la surface de l'objet de référence et un globe oculaire, et calcule une puissance d'addition de chaque position de passage estimée sur la base des informations de prescription du porteur, et conçoit le couloir.

7. L'appareil de production de verres de lunettes selon la revendication 6, dans lequel le moyen de conception de surface d'objet de référence construit un premier modèle optique virtuel comprenant le verre de référence (BL, BL$_R$, BL$_L$) à droite et à gauche, et des modèles de globe oculaire droit et gauche (E, E$_R$, E$_L$) du porteur, et conçoit la surface de l'objet de référence sur la base du premier modèle optique virtuel construit ;

dans le premier modèle optique virtuel, une position en hauteur du point oculaire éloigné (F) du verre de référence (BL, BL$_R$, BL$_L$) à droite et à gauche est égale entre la droite et la gauche, le moyen de conception construit un deuxième modèle optique virtuel comprenant les verres correcteurs droit et gauche (PL, PL$_R$, PL$_L$) et les modèles de globe oculaire droit et gauche (E, E$_R$, E$_L$) du porteur, et conçoit le couloir sur la base du deuxième modèle optique virtuel construit ;

dans le deuxième modèle optique virtuel, une position en hauteur du point oculaire à distance (F) des verres correcteurs droit et gauche (PL, PL$_R$, PL$_L$) est différente entre la droite et la gauche, et une position en hauteur de pupille des modèles de globe oculaire droit et gauche (E, E$_R$, E$_L$) sont différents entre le droit et le gauche ; et le moyen de conception estime, pour chaque verre correcteur (PL, PL$_R$, PL$_L$) des verres correcteurs droit et gauche (PL, PL$_R$, PL$_L$), une position de passage sur le verre correcteur (PL, PL$_R$, PL$_L$) d'un rayon reliant chaque point objet (P) sur la surface de l'objet de référence et chaque modèle parmi les modèles de globe oculaire droit et gauche (E, E$_R$, E$_L$) du deuxième modèle optique virtuel.

8. Un procédé mise en oeuvre par ordinateur, de conception de verres de lunettes pour concevoir une paire de verres de lunettes droit et gauche dans le but d'utiliser la conception résultante pour la fabrication de la paire de verres de lunettes gauche et droit, chacun comprenant une zone de vision de loin, une zone de vision de près et une zone progressive dans lequel une puissance réfractive change progressivement entre la zone de vision de loin et la zone de vision de près, le procédé de conception de verres de lunettes comprenant :

une étape de réglage de verre de référence consistant à régler un verre de référence (BL, BL$_R$, BL$_L$) commun à droite et à gauche sur la base d'informations de prescription d'un porteur ; une étape de définition de surface d'objet de référence consistant à définir une surface d'objet de référence formée d'une pluralité de points d'objet (P) disposés à différentes distances d'objet sur la base du verre de référence (BL, BL$_R$, BL) à droite et à gauche ; et une étape de conception consistant à régler des verres correcteurs droit et gauche (PL, PL$_R$, PL$_L$) de telle sorte qu'une position en hauteur d'un point oculaire à distance (F), qui est un point de référence de la zone de vision de loin, est différente entre la droite et la gauche, dans un état de montage sur une monture de lunettes, en fonction d'une différence droite/gauche de position de hauteur de pupille du porteur, et le fait, pour chaque verre correcteur (PL, PL$_R$, PL$_L$) des verres correcteurs droit et gauche (PL, PL$_R$, PL$_L$) définis, de concevoir un couloir du verre correcteur (PL, PL$_R$, PL$_L$) sur la base d'un rayon principal provenant de chaque point objet (P) sur la surface de l'objet de référence, de sorte que la longueur du couloir avec un point oculaire à distance plus élevée soit plus longue que la longueur du couloir avec un point oculaire à distance inférieure.

9. Un programme de conception de verres de lunettes pour concevoir une paire de verres de lunettes droit et gauche, dans le but d'utiliser la conception résultante pour la fabrication de la paire de verres de lunettes gauche et droit, chaque verre comprenant une zone de vision de loin, une zone de vision de près et une zone progressive dans laquelle une puissance réfractive change progressivement entre la zone de vision de loin et la zone de vision de près, le programme de conception de verres de lunettes amenant un ordinateur à exécuter :

une étape de réglage de verre de référence consistant à régler un verre de référence (BL, BL$_R$, BL$_L$) commun à droite et à gauche sur la base d'informations de prescription d'un porteur ; une étape de définition de surface d'objet de référence consistant à définir une surface d'objet de référence formée d'une pluralité de points d'objet (P) disposés à différentes distances d'objet sur la base du verre de référence (BL, BL$_R$, BL$_L$) à droite et à gauche ; et une étape de conception consistant à régler des verres correcteurs droit et gauche (PL, PL$_R$, PL$_L$) de telle sorte qu'une position en hauteur d'un point oculaire à distance (F) qui est un point de référence de la zone de vision de loin est différente entre la droite et la gauche, dans un état de montage dans une monture de lunettes, en fonction d'une différence de position droite/gauche de hauteur de pupille du porteur, et le fait, pour chaque verre correcteur (PL, PL$_R$, PL$_L$) des verres correcteurs droit et gauche (PL, PL$_R$, PL$_L$) définis, de concevoir un couloir du verre correcteur (PL, PL$_R$, PL$_L$) sur la base d'un rayon principal de chaque point objet (P) sur la surface de l'objet de référence, de sorte que la longueur du couloir avec un point oculaire à distance plus élevée soit plus longue que la longueur du couloir avec un point oculaire à distance inférieure.

*FIG. 1*

SPECTACLE STORE    10

STOREFRONT
COMPUTER    100

1

SPECTACLE LENS
PRODUCING FACTORY    20

HOST
COMPUTER    200

SPECTACLE LENS
DESIGNING
COMPUTER    202

SPECTACLE LENS
PROCESSING
COMPUTER    204

PROCESSING
MACHINE    206

*FIG. 2*

( PRODUCING METHOD )

DESIGN SPECTACLE LENS    S1

PRODUCE SPECTACLE LENS    S2

( END )

# FIG. 3

```
┌─────────────────────────────┐
│      DESIGNING METHOD        │
└─────────────────────────────┘
              │
              ▼
┌─────────────────────────────┐
│      SET REFERENCE LENS      │──── S11
└─────────────────────────────┘
              │
              ▼
┌─────────────────────────────┐
│  CONSTRUCT VIRTUAL OPTICAL MODEL │──── S12
│    BASED ON REFERENCE LENS   │
└─────────────────────────────┘
              │
              ▼
┌─────────────────────────────┐
│  SET REFERENCE OBJECT SURFACE │──── S13
│    COMMON TO RIGHT AND LEFT  │
└─────────────────────────────┘
              │
              ▼
┌─────────────────────────────┐
│      SET PRESCRIPTION LENS   │──── S14
└─────────────────────────────┘
              │
              ▼
┌─────────────────────────────┐
│  RECONSTRUCT VIRTUAL OPTICAL MODEL │──── S15
└─────────────────────────────┘
              │
              ▼
┌─────────────────────────────┐
│ DESIGN PRESCRIPTION LENS BY RAY TRACING │──── S16
└─────────────────────────────┘
              │
              ▼
┌─────────────────────────────┐
│    CORRECT PRESCRIPTION LENS │──── S17
└─────────────────────────────┘
              │
              ▼
┌─────────────────────────────┐
│  ALLOCATE PROGRESSIVE DISTRIBUTION │──── S18
└─────────────────────────────┘
              │
              ▼
┌─────────────────────────────┐
│ PERFORM ASPHERICAL CORRECTION IN │──── S19
│  CONSIDERATION OF WEARING STATE │
└─────────────────────────────┘
              │
              ▼
┌─────────────────────────────┐
│             END              │
└─────────────────────────────┘
```

# FIG. 4

(a)

(b)

# FIG. 5

FIG. 6

REFERENCE
OBJECT SURFACE

(a)

(b)

EP 3 633 440 B1

# FIG. 7

(a)

(b)

# FIG. 8

(a)

(b)

# FIG. 9

(a)

(b)

## FIG. 10

(a)

(b)

# FIG. 11

(a)

(b)

## FIG. 12

(a)

(b)

# FIG. 13

```
        ( DESIGNING METHOD )
                  │
                  ▼
┌──────────────────────────────────┐
│        SET REFERENCE LENS        │───S21
└──────────────────────────────────┘
                  │
                  ▼
┌──────────────────────────────────┐
│   CONSTRUCT VIRTUAL OPTICAL MODEL │───S22
│       BASED ON REFERENCE LENS     │
└──────────────────────────────────┘
                  │
                  ▼
┌──────────────────────────────────┐
│    SET REFERENCE OBJECT SURFACE   │───S23
│      COMMON TO RIGHT AND LEFT     │
└──────────────────────────────────┘
                  │
                  ▼
┌──────────────────────────────────┐
│        SET PRESCRIPTION LENS      │───S24
└──────────────────────────────────┘
                  │
                  ▼
┌──────────────────────────────────┐
│   RECONSTRUCT VIRTUAL OPTICAL MODEL│──S25
└──────────────────────────────────┘
                  │
                  ▼
┌──────────────────────────────────┐
│ DESIGN PRESCRIPTION LENS BY RAY TRACING│─S26
└──────────────────────────────────┘
                  │
                  ▼
┌──────────────────────────────────┐
│      CORRECT PRESCRIPTION LENS    │───S27
└──────────────────────────────────┘
                  │
                  ▼
┌──────────────────────────────────┐
│  ALLOCATE PROGRESSIVE DISTRIBUTION │──S28
└──────────────────────────────────┘
                  │
                  ▼
┌──────────────────────────────────┐
│   PERFORM ASPHERICAL CORRECTION IN │──S29
│   CONSIDERATION OF WEARING STATE   │
└──────────────────────────────────┘
                  │
                  ▼
              ( END )
```

FIG. 14

(a)

(b)

# FIG. 15

(a)

(b)

# FIG. 16

(a)

(b)

## FIG. 17

(a)

(b)

# FIG. 18

```
           ( DESIGNING METHOD )
                    │
                    ▼
    ┌──────────────────────────────────┐
    │        SET REFERENCE LENS        │─── S31
    └──────────────────────────────────┘
                    │
                    ▼
    ┌──────────────────────────────────┐
    │   CONSTRUCT VIRTUAL OPTICAL MODEL │─── S32
    │      BASED ON REFERENCE LENS      │
    └──────────────────────────────────┘
                    │
                    ▼
    ┌──────────────────────────────────┐
    │    SET REFERENCE OBJECT SURFACE   │─── S33
    │     COMMON TO RIGHT AND LEFT      │
    └──────────────────────────────────┘
                    │
                    ▼
    ┌──────────────────────────────────┐
    │       SET PRESCRIPTION LENS       │─── S34
    └──────────────────────────────────┘
                    │
                    ▼
    ┌──────────────────────────────────┐
    │   RECONSTRUCT VIRTUAL OPTICAL MODEL│─── S35
    └──────────────────────────────────┘
                    │
                    ▼
    ┌──────────────────────────────────┐
    │ DESIGN PRESCRIPTION LENS BY RAY TRACING │─── S36
    └──────────────────────────────────┘
                    │
                    ▼
    ┌──────────────────────────────────┐
    │      CORRECT PRESCRIPTION LENS    │─── S37
    └──────────────────────────────────┘
                    │
                    ▼
    ┌──────────────────────────────────┐
    │   ALLOCATE PROGRESSIVE DISTRIBUTION│─── S38
    └──────────────────────────────────┘
                    │
                    ▼
    ┌──────────────────────────────────┐
    │   PERFORM ASPHERICAL CORRECTION IN│─── S39
    │   CONSIDERATION OF WEARING STATE  │
    └──────────────────────────────────┘
                    │
                    ▼
              ( END )
```

# FIG. 19

(a)

(b)

## FIG. 20

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6138422 A
- WO 2014097851 A
- EP 2937730 A1
- EP 2937729 A1
- EP 2937728 A1
- EP 2937727 A1
- WO 2014128035 A1